# EUROPEAN PATENT SPECIFICATION

(11) **EP 2 189 909 B1**
(45) Date of publication and mention of the grant of the patent: **12.02.2014**
(21) Application number: 07807388.9
(22) Date of filing: 14.09.2007
(51) Int. Cl.: G06F 12/00, G06F 15/167, G06F 13/16

(54) **INFORMATION PROCESSING UNIT AND METHOD FOR CONTROLLING THE SAME**
INFORMATIONSVERARBEITUNGSEINHEIT UND VERFAHREN ZU IHRER STEUERUNG
UNITÉ DE TRAITEMENT D'INFORMATION ET SON PROCÉDÉ DE COMMANDE

(43) Date of publication of application: 26.05.2010
(73) Proprietor: Fujitsu Limited, Kawasaki-shi, Kanagawa 211-8588 (JP)
(72) Inventor: SUGANO, Fumitake, Kawasaki-shi Kanagawa 211-8588 (JP); TAKAHASHI, Jin, Kawasaki-shi Kanagawa 2118588 (JP)
(74) Representative: Stebbing, Timothy Charles
(86) International application number: PCT/JP2007/067984
(87) International publication number: WO 2009/034652

(56) References cited:
- JP-A- 08 095 851
- JP-A- 11 161 778
- JP-A- 2000 099 391
- JP-A- 2005 267 369
- JP-A- 2007 018 161

## Description

The present invention relates to an information processing unit and a method for controlling the same.

### Background Art

Some information processing units include a plurality of devices, such as a processor, a system controller, a memory controller and a memory module. In such an information processing unit, the processor accesses the memory controller via the system controller to write or read data to or from the memory module, for example.

In contrast, in such an information processing unit, the data must be routed through the system controller at the time of writing or reading data to or from the memory module. Such routing requires time before the writing or reading of the data to or from the memory module is started.

Some information processing units write or read data to or from a memory module managed directly by the memory controller mounted in a processor. In such information processing units, the memory controller can write or read data directly to or from the memory module without causing the data to be routed through the system controller. Accordingly, the time required before writing or reading the data to or from the memory module can be reduced.

However, the number of the memory modules that can be mounted on one memory interface is usually limited. In such an information processing unit, it is difficult to increase the number of memory modules due to restrictions on memory interface pins. As a result, it is not possible to increase the memory capacity of the information processing unit.

Related art documents are listed below.
Patent Document 1: Japanese Laid-Open Patent Publication No. 05-210645
Patent Document 2: Japanese Laid-Open Patent Publication No. 05-216757
Patent Document 3: Japanese Laid-Open Patent Publication No. 10-240696
Patent Document 4: Japanese Laid-Open Patent Publication No. 2003-006174

Japanese Laid-Open Patent Publication No. 2005-267369 discloses an information processing unit and a control method according to the preamble of each independent claim, in which an auto-refresh cycle for SDRAM and a memory cycle for SRAM are executed in parallel, a memory controller including both an SRAM controller and an SDRAM controller.

### Disclosure of Invention

### Problems to be Solved by the Invention

It is an object of the invention to provide an information processing unit that provides reduced access time to a memory module and increased memory capacity. Means for Solving the Problems

An information processing unit according to the invention includes: a first memory for storing data; a second memory for storing data; a first memory controller unit for controlling writing or reading of data to or from the first memory; and a second memory controller unit for controlling writing or reading of the data to or from the first memory and the second memory; characterised by a selection means for selecting one of the first and the second memory controller units and causing the selected memory controller unit to write or read data to or from the first memory.

Preferably, if the selection means has selected the first memory controller unit, the first memory controller unit writes or reads data to or from the first memory.

Preferably, if the selection means has selected the second memory controller unit, the second memory controller unit writes or reads data to or from the first memory and the second memory.

Preferably, the information processing unit further includes a control unit for controlling the second memory controller unit; and if the selection means has selected the first memory controller unit, the control unit causes the second memory controller unit to write or read data to or from the second memory.

Preferably, the information processing unit further includes a processing device for processing data; and the first memory controller unit is provided in the processing device.

Preferably, the second memory controller unit is connected to the processing device.

Preferably, the information processing unit has a first system board and a second system board, the first memory controller unit, the second memory controller unit and the selection means being included in the first system board, and the second system board including: a third memory for storing data; a fourth memory for storing data; a third memory controller unit for controlling writing or reading of data to or from the third memory; a fourth memory controller unit for controlling writing or reading of data to or from the third memory and the fourth memory; and a second selection means for selecting one of the third or the fourth memory controller units and causing the selected memory controller unit to write or read data to or from the third memory.

Preferably, the first selection means selects the first memory controller unit; the first memory controller unit writes or reads data to or from the first memory; the second selection means selects the fourth memory controller unit; and the fourth memory controller unit writes or reads data to or from the third memory or the fourth memory.

Preferably, the second system board further includes a control unit for controlling the fourth memory controller unit; the first selection means selects the first memory controller unit; the first memory controller unit writes or reads data to or from the first memory; and the control unit causes the fourth memory controller unit to write or read data to or from the third memory or the fourth memory.

Preferably, the second system board further includes a control unit for controlling the fourth memory controller unit; the first selection means selects the second memory controller unit, the second memory controller unit writes or reads data to or from the first memory or the second memory; and the control unit causes the fourth memory controller unit to write or read data to or from the third memory or the fourth memory.

Preferably, the first system board further includes a first processing device for processing data; the second system board further includes a second processing device for processing data; the first memory controller unit is provided in the first processing device; and the third memory controller unit is provided in the second processing device.

Preferably, the second memory controller unit is connected to the first processing device and the fourth memory controller unit is connected to the second processing device.

According to a second aspect of the present invention, there is provided a method of controlling an information processing unit having a first memory controller unit controlling writing or reading of data to or from a first memory in which data is stored and a second memory controller unit controlling writing or reading of data to or from the first memory and a second memory in which data is stored; characterised in that the information processing unit selects one of the first memory controller unit and the second memory controller unit and then causes the selected one of the first and the second memory controller units to write or read data to or from the first memory.

In the control method, preferably, if the first memory controller unit has been selected, the first memory controller unit writes or reads data to or from the first memory.

In the control method, preferably, if the second memory controller unit has been selected, the second memory controller unit writes or reads data to or from the first memory and the second memory.

### Effect of Invention

According to the invention, an information processing unit can be provided with a path for accessing a memory module from a first memory controller unit and a path for accessing a memory module from a second memory controller unit. If, for example, the first memory controller unit is provided in a processing device and can access a memory module at a high speed and the second memory controller unit is connected to the processing device and the memory module can be expanded, the first memory controller unit can access the memory module to which high-speed access is required and the second memory controller unit can access the memory module for which increased memory capacity is required. Therefore, reduced access time to the memory module and increased memory capacity can be provided.

### Brief Description of Drawings

Fig. 1 illustrates a hardware configuration of an information processing unit (a first aspect).
Fig. 2 illustrates a system board (a first aspect).
Fig. 3 illustrates a system controller.
Fig. 4 illustrates an extended sub memory controller.
Fig. 5 illustrates a relationship between a register and a system management board.
Fig. 6 illustrates exemplary memory allocation according to the present embodiment.
Fig. 7 illustrates exemplary decoding of a local address table according to the present embodiment.
Fig. 8 illustrates an exemplary mixed mode of a plurality of modes.
Fig. 9 illustrates a system implementable in mode 1.
Fig. 10 illustrates access to a memory module in the mode 1 (a first aspect).
Fig. 11 illustrates access to the memory module in the mode 1 (a second aspect).
Fig. 12 illustrates access to the memory module in the mode 1 (a third aspect).
Fig. 13 illustrates a system implementable in mode 2.
Fig. 14 illustrates access to a memory module in mode 2 (a first aspect).
Fig. 15 illustrates access to the memory module in the mode 2 (a second aspect).
Fig. 16 illustrates access to the memory module in the mode 2 (a third aspect).
Fig. 17 illustrates a system implementable in mode 3.
Fig. 18 illustrates access to a memory module in mode 3 (a first aspect).
Fig. 19 illustrates access to the memory module in the mode 3 (a second aspect).
Fig. 20 illustrates access to the memory module in the mode 3 (a third aspect).
Fig. 21 illustrates a system implementable in a mixed mode of the modes 1 and 3.
Fig. 22 illustrates access to a memory module in the mixed mode of the modes 1 and 3.
Fig. 23 illustrates a system board (a second aspect).
Fig. 24 illustrates a system board (a third aspect).
Fig. 25 illustrates a function of a processor to turn a memory controller off.
Fig. 26 illustrates a hardware configuration of an information processing unit (a second aspect).

### Reference Numerals

- 0: information processing unit
- 1, 2, 3, 4: processors
- 11, 21, 31, 41: memory controllers
- 10, 12, 13, 14, 15, 20, 22, 23, 24, 25, 30,:
- 32, 33, 34, 35, 40, 42, 43, 44, 45: system buses
- 16, 17, 18, 26, 27, 28, 36, 37, 38, 46, 47, 48: memory modules
- 19, 39: cores
- 5, 6, 7, 8, 1064: multiplexers
- 51, 61, 71, 81: extended sub memory controllers
- 100: system board
- 101, 102: system controllers
- 104: system bus controller
- 105: memory controller
- 106: extended memory controller
- 110, 410, 510, 810, 1022, 1044: setting registers
- 200: I/O board
- 202, 204: buses
- 300: crossbar
- 400: system management board
- 401, 402, 403, 404: system management buses
- 512, 513, 514, 515, 516, 518: buses
- 520, 1069: data buffers
- 522: AND circuit
- 524, 1062: request buffers
- 526, 532, 534, 1044: setting registers
- 528, 536, 538: selectors
- 530: local address table
- 600: memory space
- 704: system address
- 706: memory number
- 708: memory local address
- 1042: address checking means
- 1066: arbiter
- 1068: address table

### Best Mode for Carrying Out the Invention

Referring now to the drawings, the present embodiment will be described.

### (Information Processing Unit)

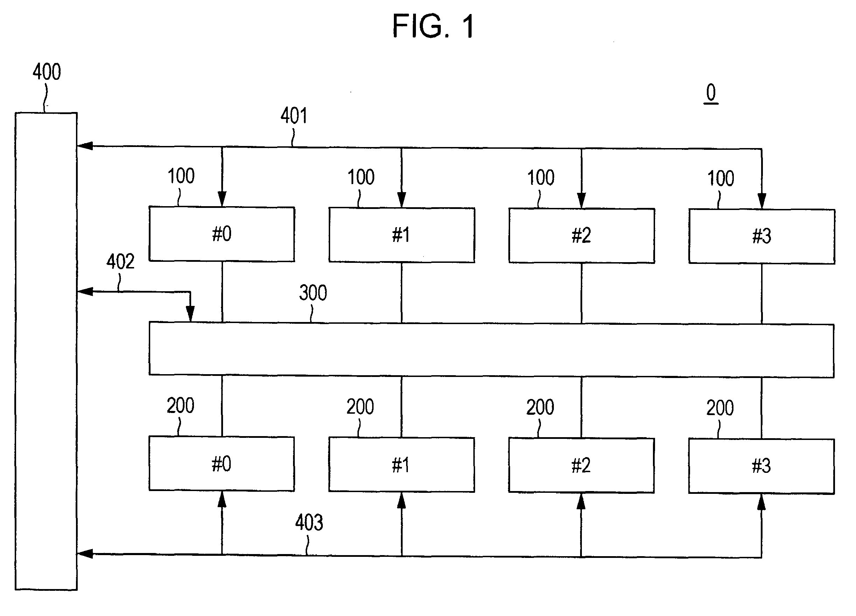

Fig. 1 illustrates an information processing unit 0 according to the present embodiment. The information processing unit 0 includes four system boards 100 and four input/output (I/O) boards 200. The numbers of the system boards 100 and the I/O boards 200 can be determined arbitrarily.

Each system board 100 includes a processor, a system controller, a memory controller and a memory module. The system controller collectively controls instructions transmitted from the processor. The system controller controls the memory controller on the basis of an instruction transmitted from the processor. The system controller transmits, to the memory controller, data to be written to the memory module. The memory controller accesses the memory module and writes or reads data thereto or therefrom. The memory controller transmits the data read from the memory module to the system controller. Examples of the memory module include a dual inline memory module (DIMM) having a plurality of dynamic random access memories (DRAM) mounted therein.

Each I/O board 200 includes a peripheral component interconnect (PCI) device. The I/O board 200 is connected to I/Os of, for example, a hard disk device (HDD) and a local area network (LAN).

The system board 100 and the I/O board 200 are connected to a crossbar 300 for data transfer between an arbitrary system board 100 and an arbitrary I/O board. The crossbar 300 includes an address crossbar for transmitting and receiving addresses and a data crossbar for transmitting and receiving data. The crossbar 300 illustrated in Fig. 1 conceptually includes the address crossbar and the data crossbar.

The information processing unit 0 further includes a system management board 400 for managing the system boards 100, the I/O boards 200 and the crossbar 300. The system management bus 400 is connected to the system boards 100 via a system management bus 401. The system management bus 400 is connected to the crossbar 300 via a system management bus 402. The system management bus 400 is connected to the I/O boards 200 via a system management bus 403.

### (System Board)

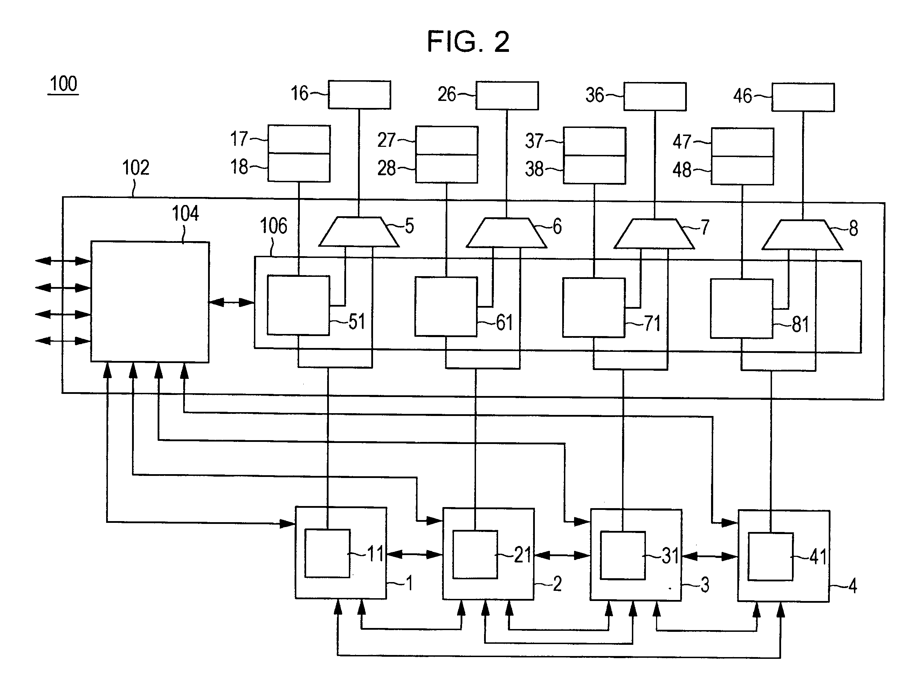

Fig. 2 illustrates the system board 100 according to the present embodiment. The system board 100 is connected to a crossbar (not shown). Other system boards are also connected to the crossbar. Requests are transmitted to the system board 100 from other system boards via the crossbar. The system board 100 includes processors 1, 2, 3 and 4, memory controllers 11, 21, 31 and 41 mounted in the respective processors, system controllers 102 connected to each of the memory controllers and a plurality of memory modules connected to the system controllers 102. Generally, the memory controller in the processor can access the memory module being managed thereby at a high speed. It is difficult, however, to expand the memory module being managed by the memory controller due to restriction on memory interface pins.

The processors 1, 2, 3 and 4 are directly linked together. A certain processor directly accesses a memory module being managed by another processor.

The system controller 102 includes a system bus controller 104. The system bus controller 104 transmits and receives data and requests to and from the processors and a crossbar (not shown). The system bus controller 104 is connected to an extended memory controller 106. The extended memory controller 106 includes extended sub memory controllers 51, 61, 71 and 81. The extended sub memory controller 51 is connected to the processor 1, a multiplexer 5 and memory modules 17 and 18. A memory module can be expanded in the extended sub memory controller. Memory capacity can thus be increased. The multiplexer 5 is further connected to a memory module 16. Similarly, other extended sub memory controllers 61, 71 and 81 are connected to processors, multiplexers and memory modules. For example, the multiplexer 5 selects any one of a request transmitted from the processor 1 and a request transmitted from the extended sub memory controller 51 and then transmits the selected request to the memory module 16. Other multiplexers 6, 7 and 8 operate in a similar manner. The system controller 102, the extended memory controller 106 and the extended sub memory controller 51 will be described later.

### (System Controller)

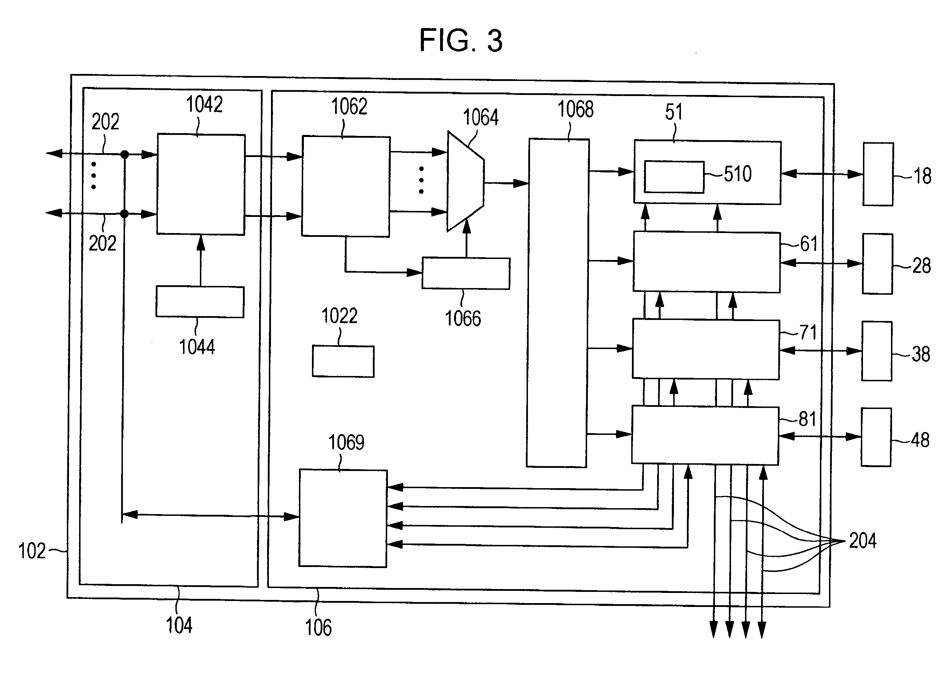

Fig. 3 illustrates the system controller 102. The system controller 102 includes a system bus controller 104 and the extended memory controller 106.

The system bus controller 104 includes address checking means 1042 and a setting register 1044. The system bus controller 104 detects whether a request for memory access has been transmitted from other system boards (not shown) via the crossbar. The system bus controller 104 also detects whether a request for memory access has been transmitted from system buses of the locally connected processors 1 to 4. The request is further transmitted from other system boards to the system bus controller 104 via the crossbar and through the bus 202. The request is transmitted from the processors 1 to 4 to the system bus controller 104 through the bus 204. When the system bus controller 104 detects that a request for memory access has been transmitted thereto, the address checking means 1042 determines whether the request is a request regarding the memory module being managed by the system controller 102 on the basis of an address included in the request.

If the request transmitted to the system bus controller 104 is found to be a request regarding the memory module being managed by the system controller 102, the address checking means 1042 transmits the request to the extended memory controller 106. If, on the other hand, the request transmitted to the system bus controller 104 is found not to be a request regarding the memory module being managed by the system controller 102, the address checking means 1042 transmits, via the crossbar, the request to a system controller on another system board to which the request should be transmitted.

If a writing request of data is made by the crossbar and the processors 1 to 4, the system bus controller 104 transmits writing data received from the crossbar or the processors 1 to 4 to the extended memory controller 106 together with the writing request.

The address checking means 1042 can be turned on and off by the setting register 1044. The setting register 1044 is set up on a system management board. The system management board is connected to the system bus controller 104. The system management board will be described later.

### (Extended Memory Controller)

The extended memory controller 106 includes a request buffer 1062, a multiplexer 1064, an arbiter 1066, an address table 1068, the extended sub memory controllers 51, 61, 71 and 81 and a data buffer 1069. Requests are transmitted to the extended sub memory controllers 51, 61, 71 and 81 from the processors 1 to 4 through the bus 204.

A request is transmitted to the request buffer 1062 from the system bus controller 104. The request buffer 1062 stores the request. The arbiter 1066 performs arbitration on the basis of, for example, an ID of the request. The arbiter 1066 then notifies the multiplexer 1064 of the request that should be executed. The multiplexer 1064 selects a request which should be executed on the basis of the notification from the arbiter 1066. The multiplexer 1064 determines a memory module which transmits the request on the basis of the request selected from the request buffer 1062 and the address table 1068. The multiplexer 1064 then transmits the selected request to the extended sub memory controller which manages the memory module. If, for example, the memory module which should transmit the request is a memory module 38, the selected request is transmitted to the extended service memory controller 71 which manages the memory module 38. The extended sub memory controller 71 transmits the received request to the memory module 38. Note that only the memory modules 18, 28, 38 and 48 are illustrated in Fig. 3.

Writing data is transmitted to the data buffer 1069 from the system bus controller 104. The data buffer 1069 stores the writing data. The extended memory controller 106 then transmits the writing data to the memory module to which the writing data should be transmitted on the basis of the request selected by the arbiter 1066. If, for example, the memory module to which the writing data should be transmitted is the memory module 46, the writing data stored in the data buffer 1069 is transmitted to the extended memory controller 81 which manages the memory module 46. The extended memory controller 81 transmits the received writing data to the memory module 46 (i.e., the memory module 46 illustrated in Fig. 2).

In the present embodiment, the information processing unit 0 operates in accordance with modes 1, 2 and 3. In mode 1, the memory controller mounted in the processor directly accesses the memory module. In mode 2, the operation of the memory controller mounted in the processor is turned off. The processor then accesses the memory module via the extended memory controller mounted on the system controller. In mode 3, a relationship between the extended memory controller mounted in the system controller and the processor is broken off. The processor and the crossbar access the extended memory controller via the system bus controller 104. In mode 3, the extended memory controller further accesses the memory module.

That is, the extended memory controller 106 operates in accordance with the modes 1, 2 and 3 described above. In the modes 1 and 2, the system bus controller 104 does not transmit a request for memory access to the request buffer 1062. This is because the setting register 1044 has turned the address checking means 1042 off. In the mode 3, the system bus controller 104 stores a request for memory access in the request buffer 1062. This is because the setting register 1044 has turned the address checking means 1042 on.

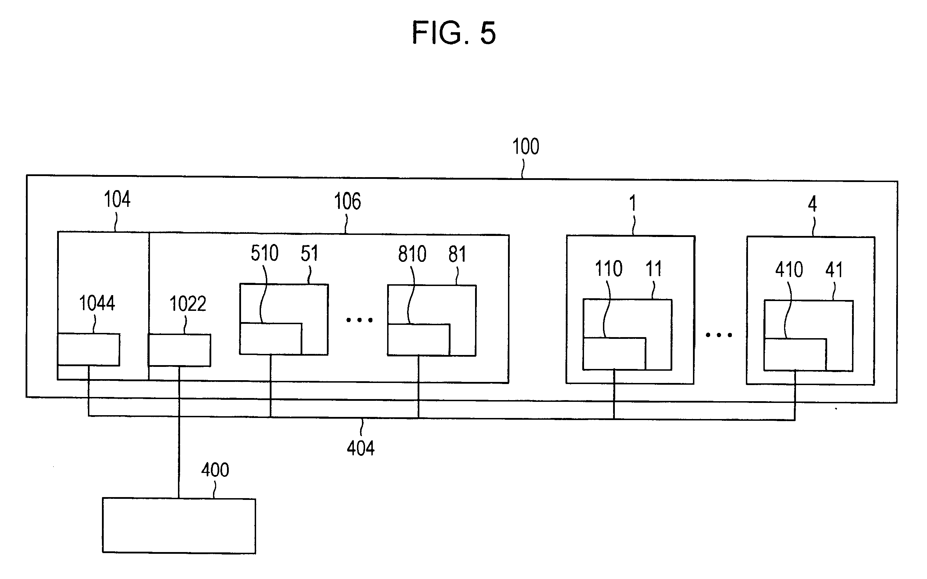

Here, the system management board 400 will be described. A relationship between the system management board 400 and the system board 100 is illustrated in Fig. 5. The system management board 400 is connected to the setting register 1044 included in the system bus controller 104, a setting register 1022 included in the extended memory controller 106, a setting register 510 included in the extended sub memory controller 51 and a setting register 110 included in the memory controller 11 mounted in the processor 1 via the system management bus 404. Since the system management board 400 manages the setting register, the system management board 400 can determine whether the extended sub memory controller 51, the memory controller 11 and other devices are to be turned on or off. Various modes can therefore be implemented in the information processing unit 0. Similarly, extended sub memory controllers other than the extended sub memory controller 51 also include setting registers and are connected to the system management board 400. For example, the extended sub memory controller 81 includes a setting register 810. Memory controllers mounted on the processors other than the processor 1 also include setting registers and are connected to the system management board 400. For example, the memory controller 41 mounted on the processor 4 includes a setting register 410.

### (Extended Sub Memory Controller)

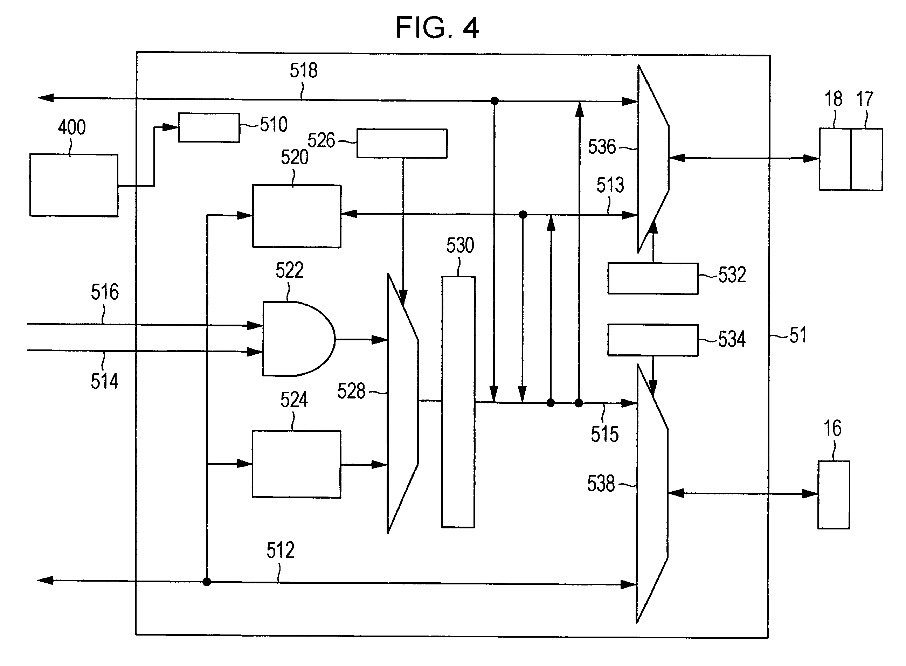

An extended sub memory controller 51 is illustrated in Fig. 4. The extended sub memory controller 51 includes a setting register 526, a setting register 532, a setting register 534, an AND circuit 522, a data buffer 520, a request buffer 524, a selector 528, a local address table 530, a selector 536 and a selector 538. Note that only the extended sub memory controller 51 is illustrated and other extended sub memory controllers 61, 71 and 81 are not illustrated in Fig. 4. Configurations of other extended sub memory controllers are the same as that of the extended sub memory controller 51.

### (Mode 1)

The mode 1 will be described first. It is assumed herein that the processor 1 accesses the memory module 16.

In the mode 1, the processor directly accesses, through the bus 512, the memory module 16 through the memory controller included therein. The system management board 400 sets he setting register 110 of the processor 1 so that the memory controller 11 mounted on the processor 1 is turned on, for example. The system management board 400 sets the setting register 510 so that the extended sub memory controller 51 is turned off, for example. The setting register 534 is set on the system management board 400 so that the selector 538 selects the bus 512.

In the mode 1, a request transmitted from the processor 1 to the memory module 16 through the bus 512 has an address that has been converted from a system address into a local address by the memory controller 11 mounted in the processor 1. In particular, the address of the request is converted from a system address into a local address by using an address table included in the memory controller 11. It is therefore not necessary for the extended sub memory controller 51 to convert the address of the request. Accordingly, the request can be transmitted to the memory module 16 without being unnecessarily routed through the buffer or the address table. In the present embodiment, the processor 1 can access the memory module 16 with the request being routed only through the selector 538.

In the present embodiment, the setting register 534 sets a path selected by the selector 538 to be fixed to the bus 512. There is thus no delay in transmission of the request otherwise caused by a dynamic movement of the selector 538.

If a writing request has been made, the processor 1 outputs writing data to the selector 538 through the bus 512. The selector 538 outputs the writing data to the memory module 16.

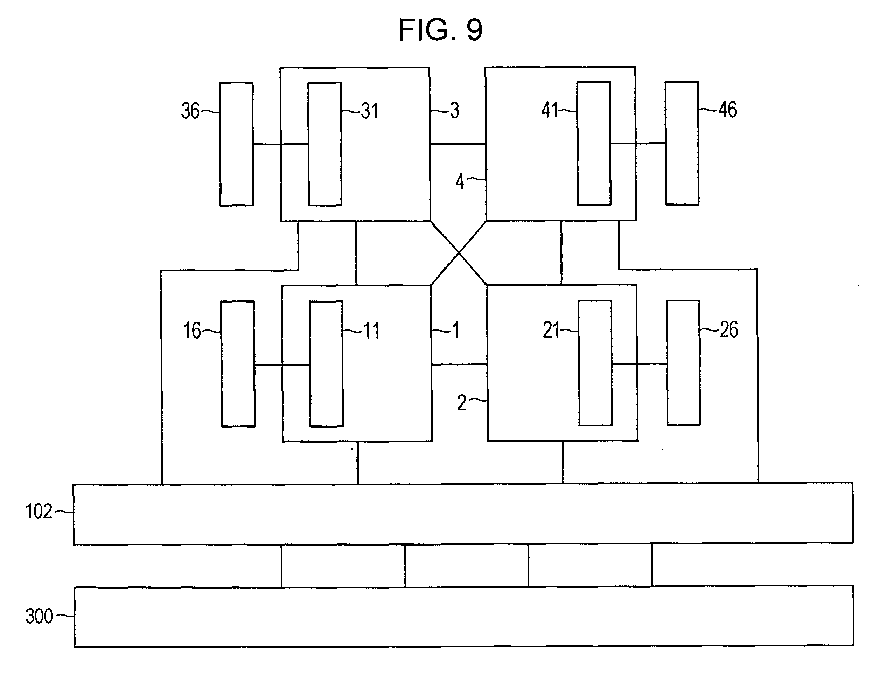

An exemplary system implementable in the mode 1 is illustrated in Fig. 9. Fig. 9 schematically illustrates the system. The processors 1, 2, 3 and 4 are directly linked together. Since the processors 1 to 4 have the memory controllers 11 to 41 mounted therein, the processors access the memory module being managed by the respective memory controllers at a high speed. For example, the processor 1 can transmit a request from the memory controller 11 to the memory module 16. For example, the processor 1 can transmit a request from the memory controller 31 of the processor 3 to the memory module 36. For example, the processor 1 can transmit a request from the memory controller 31 of the processor 3 to the memory module 36 via the system controller 102. For example, the processor 1 can transmit a request to a memory module of another system board via the system controller 102 and the crossbar 300. Since other processors 2, 3 and 4 operate in a similar manner, description thereof will be omitted.

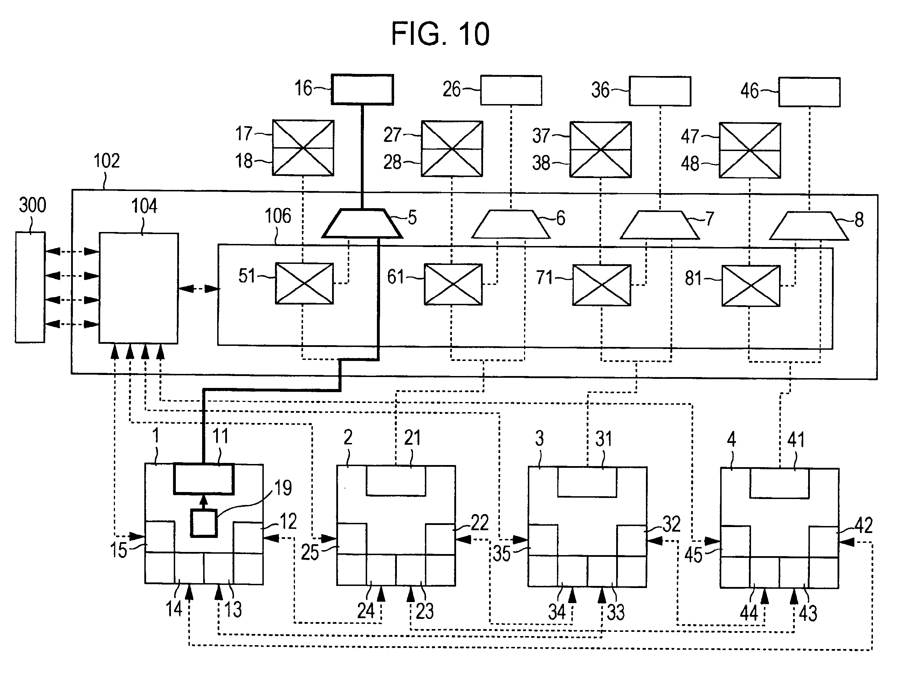

The operation of the system in the mode 1 is illustrated in Figs. 10, 11 and 12. First, each component will be described with reference to Fig. 10. The processor 1 includes the memory controller 11 and the system buses 12, 13, 14 and 15. The memory controller 11 transmits a request to the multiplexer 5 or to the extended sub memory controller 51. The system buses 12 to 15 transmit and receive the request to and from other components. For example, the system bus 12 transmits and receives the request to and from a system bus 24 of the processor 2. For example, the system bus 13 transmits and receives the request to and from a system bus 33 of the processor 3. For example, the system bus 14 transmits and receives the request to and from a system bus 42 of the processor 4. For example, the system bus 15 transmits and receives the request to and from the system bus controller 104. Similarly, the processor 2 includes a memory controller 21 and system buses 22, 23, 24 and 25. Similarly, the processor 3 includes a memory controller 31 and system buses 32, 33, 34 and 35. Similarly, the processor 4 includes a memory controller 41 and system buses 42, 43, 44 and 45.

Fig. 10 illustrates an operation of the system when the system accesses the memory module 16 being managed by the processor 1. A core 19 included in the processor 1 transmits a request to the memory module 16 via the memory controller 11. Here, the extended sub memory controller 51 has been turned off. Since the processor 1 accesses the memory module 16 via the memory controller 11, the processor 1 does not access the memory modules 17 and 18.

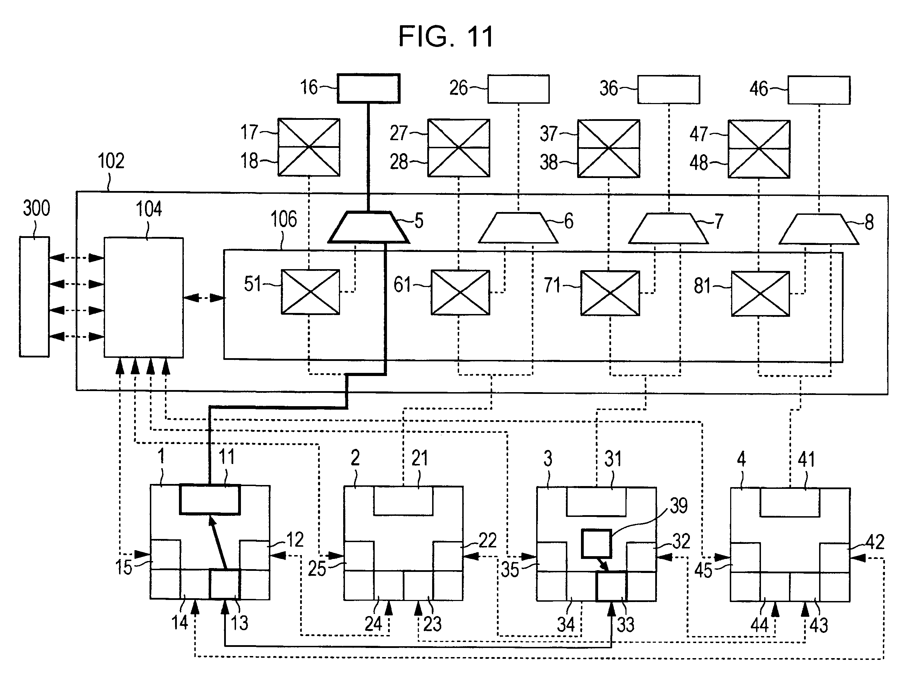

Fig. 11 illustrates an operation of the system when a certain processor accesses a memory module being managed by another processor. Here, a correspondence between the processor 1 and the processor 3 will be described. First, a core 39 included in the processor 3 transmits a request to the system bus 13 of the processor 1 through the system bus 33. The system bus 13 transmits the request received from the processor 3 to the memory module 16 via the memory controller 11.

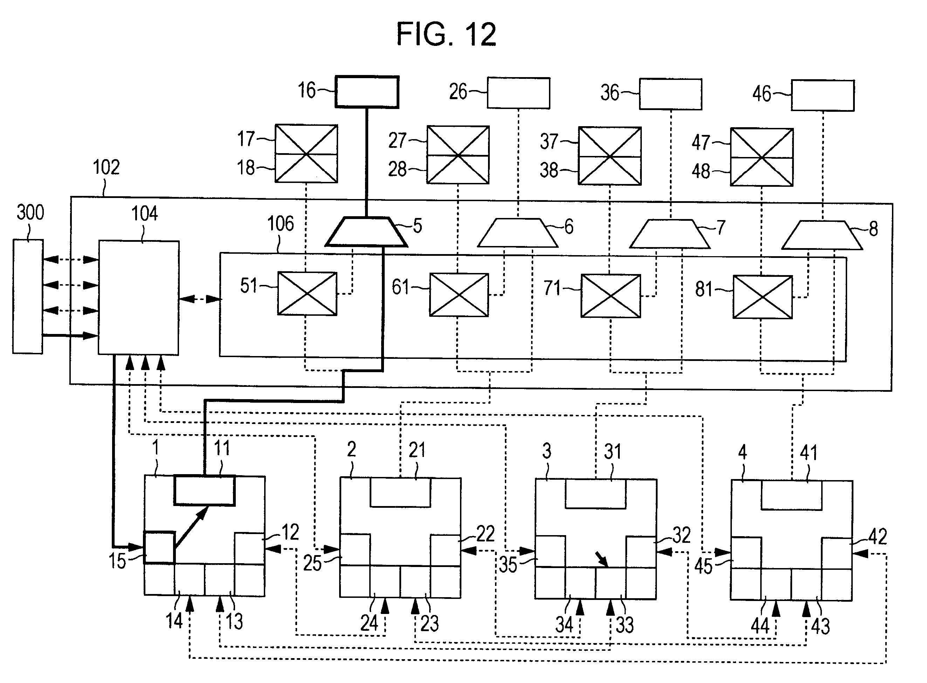

Fig. 12 illustrates memory module access among the system boards connected together via the crossbar. Fig. 12 illustrates an operation of the system when a processor (not shown) mounted on a certain system board accesses a memory module being managed by a processor mounted on another system board. First, a processor mounted on a certain system board transmits a request to the system bus 15 of the processor 1 via the crossbar 300. The system bus 15 transmits the received request to the memory module 16 via the memory controller 11.

In the mode 1, as described above, the request can be transmitted to the memory module 16 without being unnecessarily routed through the buffer or the address table. Accordingly, in a system in which the processor and the memory module are directly linked together, the processor can access the memory module that is directly linked thereto with a minimum decrease in memory access latency.

### (Mode 2)

Next, the mode 2 will be described. In the mode 2, a processor accesses a memory module via an extended sub memory controller. Here, it is assumed that the processor 1 accesses one of the memory modules 16 to 18. The system management board 400 sets the setting register 110 so that the memory controller 11 mounted on the processor 1 is turned off, for example. The system management board 400 sets the setting register 510 so that the extended sub memory controller 51 is turned on, for example. The processor 1 transmits a request to the request buffer 524 through the bus 512. The request buffer 524 stores the received request.

Thus, in the mode 2, the request is transmitted to the request buffer 524 from the processor 1 without being routed through the memory controller 11 mounted on the processor 1. The request is therefore input in the same format as that of the input into the high-order extended memory controller 106. It is therefore necessary to convert a system address included in the request into a local address for the memory module by using the local address table 530 for the execution of memory access.

The system management board 400 sets the setting register 526 so that the selector 528 selects an output of the request buffer 524. The system management board 400 sets the setting register 532 so that the selector 536 selects the bus 513. The system management board 400 sets the setting register 534 so that the selector 538 selects the bus 515. The request buffer 524 outputs the stored request to the selector 528. The selector 528 outputs the request to the local address table 530.

The extended sub memory controller 51 converts a system address included in the request includes into a local address on the basis of the local address table 530. If it is determined that the request should be transmitted to the memory module 17 or 18, the extended sub memory controller 51 outputs the request to the selector 536 through the bus 513. The selector 536 outputs the request to the memory module 17 or 18. If, on the other hand, it is determined that the request should be transmitted to the memory module 16, the extended sub memory controller 51 outputs the request to the selector 538 through the bus 515. The selector 538 outputs the request to the memory module 16.

If a writing request has been made, the processor 1 stores writing data in the data buffer 520 through the bus 512. The extended sub memory controller 51 determines a memory module to which the writing data should be transmitted on the basis of the local address described above. If it is determined that the writing data should be transmitted to the memory modules 17 and 18, the extended sub memory controller 51 outputs the writing data to the selector 536 through the bus 513. The selector 536 outputs the writing data to the memory module 17 or 18. If, on the other hand, it is determined that the writing data should be transmitted to the memory module 16, the extended sub memory controller 51 outputs the writing data to the selector 538 through the bus 515. The selector 538 outputs the writing data to the memory module 16.

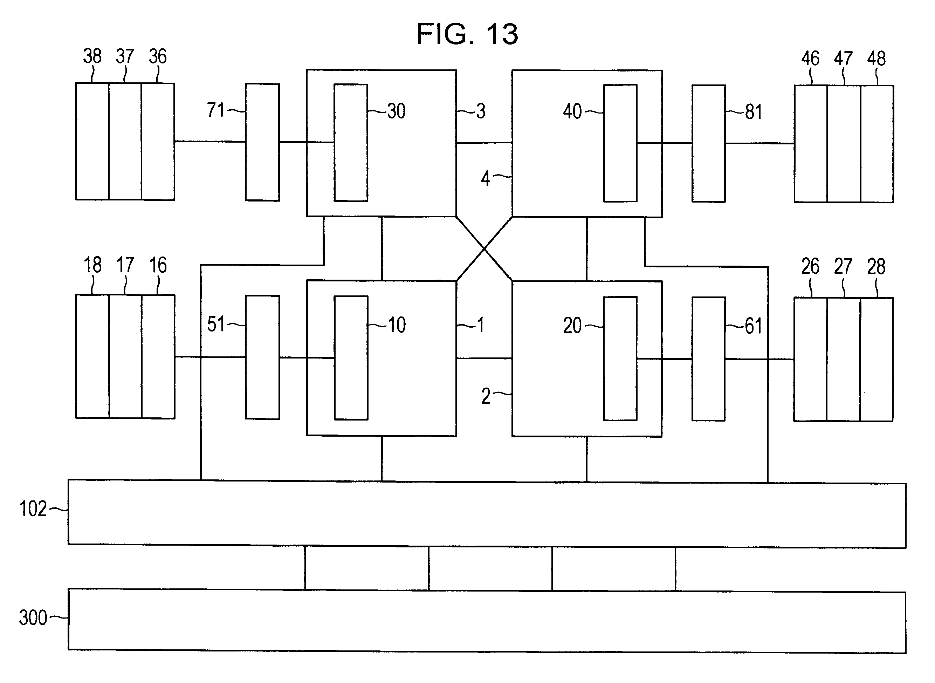

Fig. 13 illustrates an exemplary system implementable in the mode 2. Fig. 13 schematically illustrates the system. Since each of the processors 1 to 4 accesses a memory module via the extended sub memory controllers 51 to 81, respectively, the number of memory modules can be expanded. For example, the processor 1 can transmit a request from the system bus 10 to the memory modules 16, 17 and 18 via the extended sub memory controller 51. For example, the processor 1 can transmit a request from the system bus 30 of the processor 3 to the memory modules 36, 37 and 38 via the extended sub memory controller 71. For example, the processor 1 can transmit a request from the system bus 30 of the processor 3 to the memory module 36, 37 and 38 via the system controller 102 and via the extended sub memory controller 71. For example, the processor 1 can transmit a request to a memory module of another system board via the system controller 102 and the crossbar 300. Since other processors 2, 3 and 4 operate in a similar manner, description thereof will be omitted.

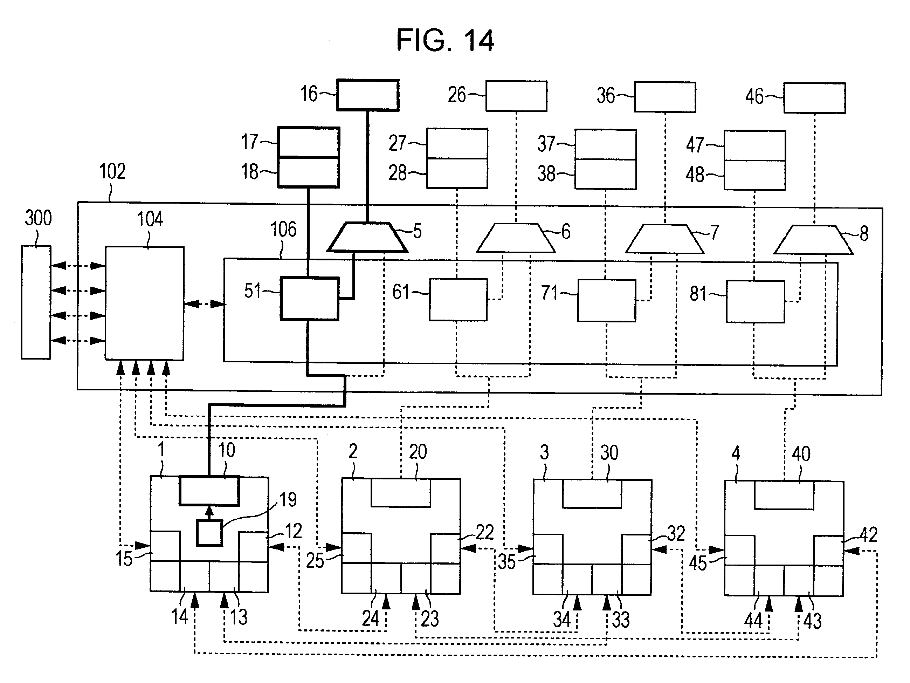

The operation of the system in the mode 2 is illustrated in Figs. 14, 15 and 16. Each component will be described first with reference to Fig. 14. The processor 1 includes the system bus 10. The system bus 10 transmits a request to the extended sub memory controller 51. Similarly, the processor 2 includes a system bus 20. Similarly, the processor 3 includes a system bus 30. Similarly, the processor 4 includes a system bus 40. Description of the components that have been described with reference to Fig. 10 will be omitted.

Fig. 14 illustrates an operation of the system when the processor 1 accesses the memory module from the extended sub memory controller 51 being managed by the processor 1. The core 19 included in the processor 1 transmits a request to the extended sub memory controller 51 through the system bus 10. The extended sub memory controller 51 transmits the request to one of the memory modules 16, 17 and 18 by using the local address table 530. In this case, the memory controller 11 (not shown) and other devices in the processor 1 have been turned off.

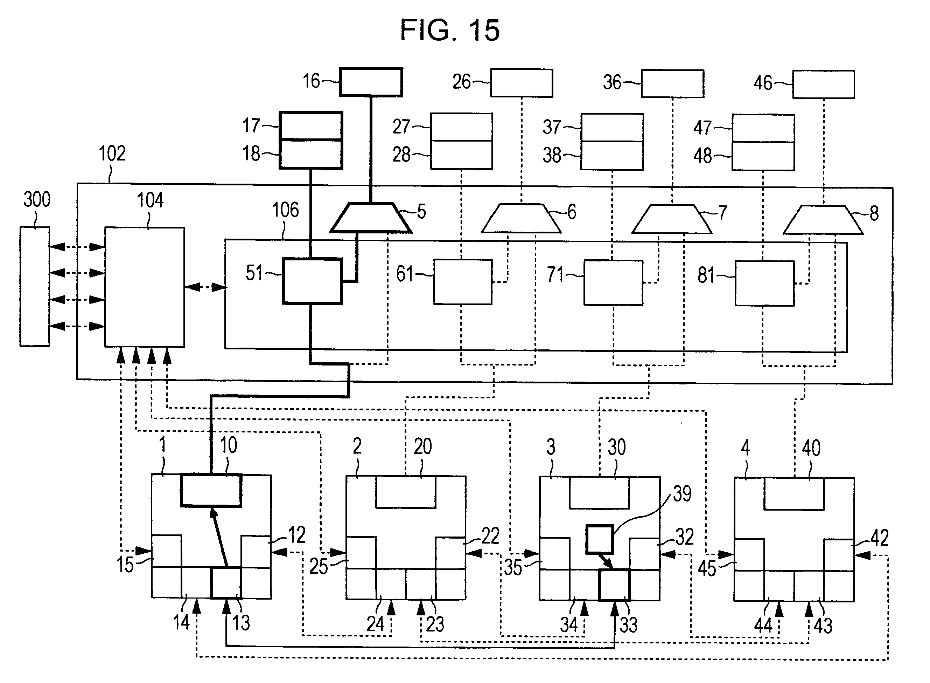

Fig. 15 illustrates an operation of the system when a certain processor accesses the memory module from an extended sub memory controller being managed by another processor. Here, a correspondence between the processor 1 and the processor 3 will be described. First, the core 39 included in the processor 3 transmits a request to the system bus 13 of the processor 1 through the system bus 33. The system bus 13 transmits the request received from the processor 3 to the extended sub memory controller 51 through the system bus 10. The extended sub memory controller 51 transmits the request to one of the memory modules 16, 17 and 18 on the basis of the local address of the request.

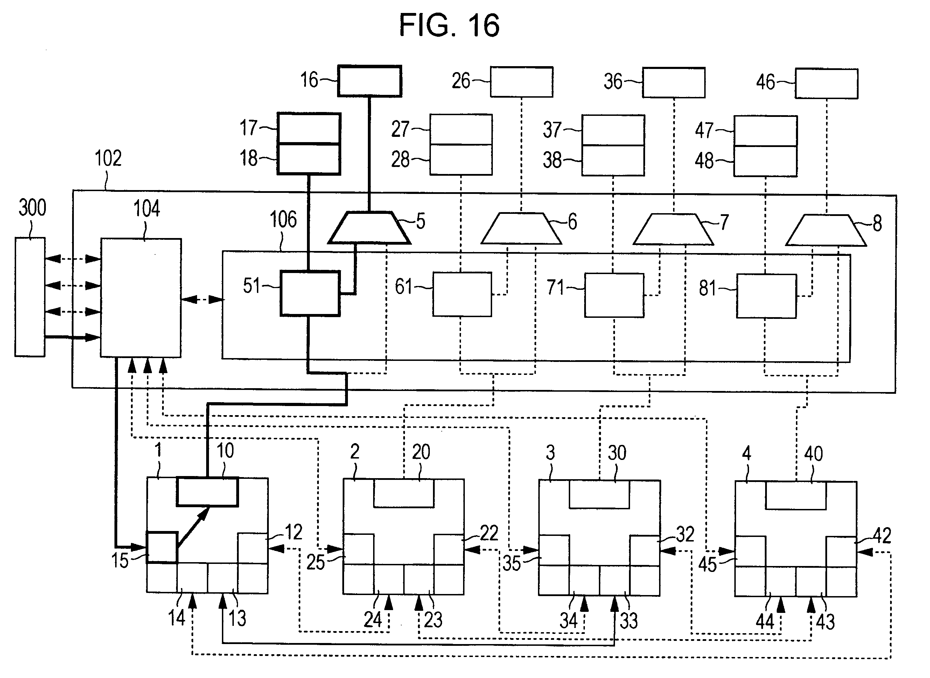

Fig. 16 illustrates an operation of the system when a processor (not shown) mounted on a certain system board accesses a memory module from an extended sub memory controller being managed by a processor mounted on another system board. In this case, the system management board 400 has turned the system bus controller 104 on. The processor mounted on the certain system board first transmits a request to the system bus 15 of the processor 1 via the crossbar 300. The system bus 15 transmits the received request to the extended sub memory controller 51 through the system bus 10. The extended sub memory controller 51 transmits the request to one of the memory modules 16, 17 and 18 by using of the local address table 530.

In the mode 2, as described above, the processor accesses the memory module via the extended memory controller. Accordingly, the number of memory modules connected to the extended memory controller can be expanded and the memory capacity of the system can therefore be increased.

### (Mode 3)

Next, an operation in the mode 3 will be described. In the mode 3, the processor accesses the memory module via the system bus controller 104 and the extended sub memory controller.

The system management board 400 sets the setting register 1044 so that the system bus controller 104 is turned on. The system management board 400 sets the setting register 510 so that the extended sub memory controller 51 is turned on, for example. The system management board 400 sets the setting register 110 so that the memory controller 11 is turned off, for example.

The system management board 400 sets the setting register 526 so that the selector 528 selects an output of the AND circuit 522. The system management board 400 sets the setting register 532 so that the selector 536 selects the bus 518. The system management board 400 sets the setting register 534 so that the selector 538 selects the bus 515.

The arbiter 1066 described above inputs an extended subcontroller request into the AND circuit 522 through the bus 516. The extended subcontroller request represents that access to a certain extended sub memory controller is possible. The system bus controller 104 inputs a system address into the AND circuit 522. The AND circuit 522 outputs the request and the system address to the local address table 530 through the bus 514.

The extended sub memory controller 51 converts the system address into a local address on the basis of the local address table 530. If it is determined that the request should be transmitted to the memory module 17 or 18, the extended sub memory controller 51 outputs the request to the selector 536. The selector 536 outputs the request to the memory module 17 or 18. If, on the other hand, it is determined that the request should be transmitted to the memory module 16, the extended sub memory controller 51 outputs the request to the selector 538. The selector 538 outputs the request to the memory module 16.

If a writing request has been made, the writing data is input into the selector 536 or the selector 538 through the bus 518 from the data buffer 1069 described above. The extended sub memory controller 51 determines a memory module to which the writing data should be transmitted on the basis of the local address described above. If it is determined that the writing data should be transmitted to the memory module 17 or 18, the extended sub memory controller 51 outputs the writing data to the selector 536. The selector 536 outputs the writing data to the memory module 17 or 18. If, on the other hand, it is determined that the writing data should be transmitted to the memory module 16, the extended sub memory controller 51 outputs the writing data to the selector 538. The selector 538 outputs the writing data to the memory module 16.

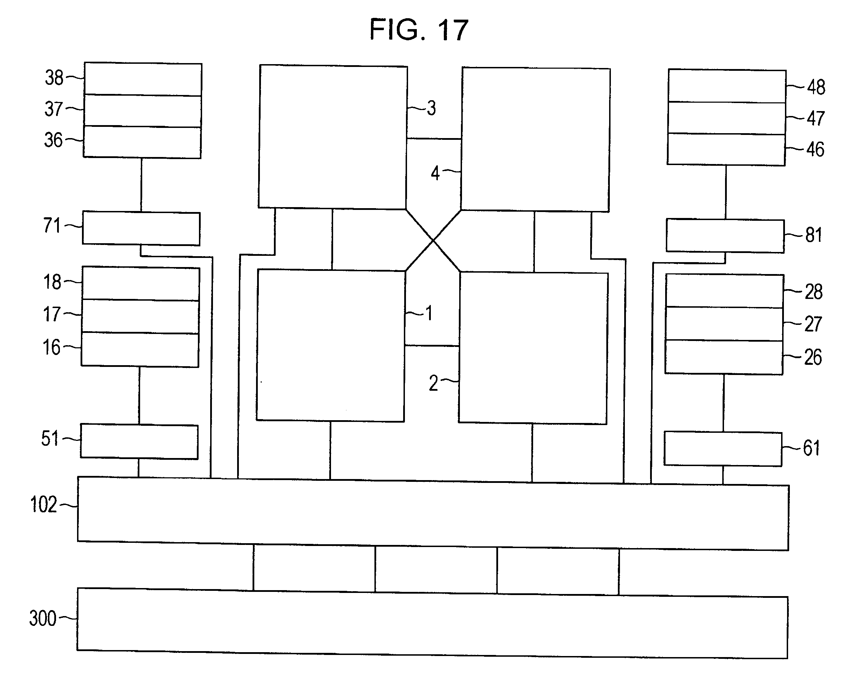

An exemplary system implementable in the mode 3 is illustrated in Fig. 17. Fig. 17 schematically illustrates the system. Each processor accesses a memory module via the system controller 102 and the extended sub memory controller. For example, the processor 1 can transmit a request from the system controller 102 to the memory modules 16, 17 and 18 via the extended sub memory controller 51. For example, the processor 3 can transmit a request from the system controller 102 to the memory modules 36, 37 and 38 via the extended sub memory controller 71. For example, the processor 1 can transmit a request to the memory module of other system boards via the system controller 102 and the crossbar 300. Since other processors 2, 3 and 4 operate in a similar manner, description thereof will be omitted.

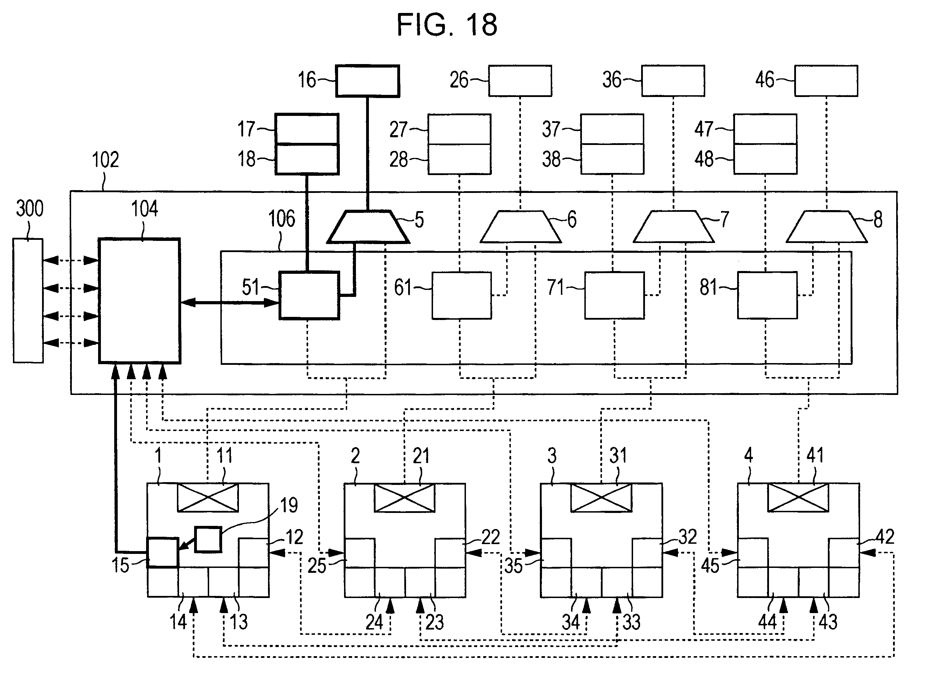

The operation of the system in the mode 3 is illustrated in Figs. 18, 19 and 20. Fig. 18 illustrates an operation of the system when the system accesses the memory module via the system bus controller 104 and an extended sub memory controller being managed by a processor in the mode 2. The core 19 included in the processor 1 transmits a request to the system bus controller 104 through the system bus 15. The system bus controller 104 transmits the request to the extended sub memory controller 51. The system bus controller 104 transmits a system address to the extended sub memory controller 51. The extended sub memory controller 51 transmits the request to one of the memory modules 16, 17 and 18 on the basis of the local address table 530. In this case, the memory controller 11 and other devices are turned off.

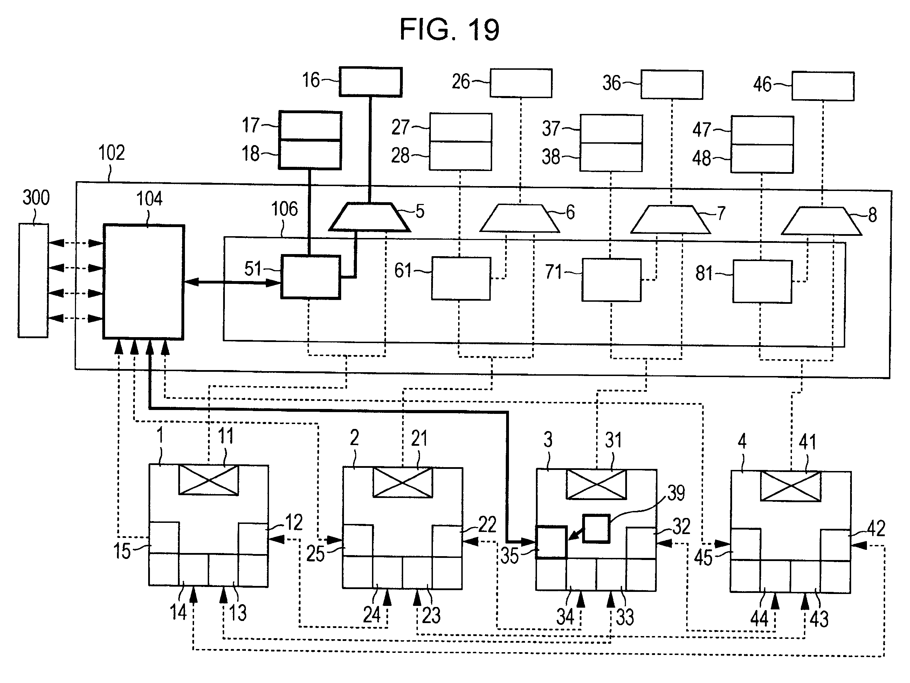

Fig. 19 illustrates an operation of the system when the system accesses the memory module via the system bus controller 104 and an extended sub memory controller being managed by another processor in the mode 2. First, the core 39 included in the processor 3 transmits a request to the system bus controller 104 through the system bus 34. The system bus controller 104 transmits the request to the extended sub memory controller 51. The system bus controller 104 transmits a system address to the extended sub memory controller 51. The extended sub memory controller 51 transmits the request to one of the memory modules 16, 17 and 18 on the basis of the local address table 530.

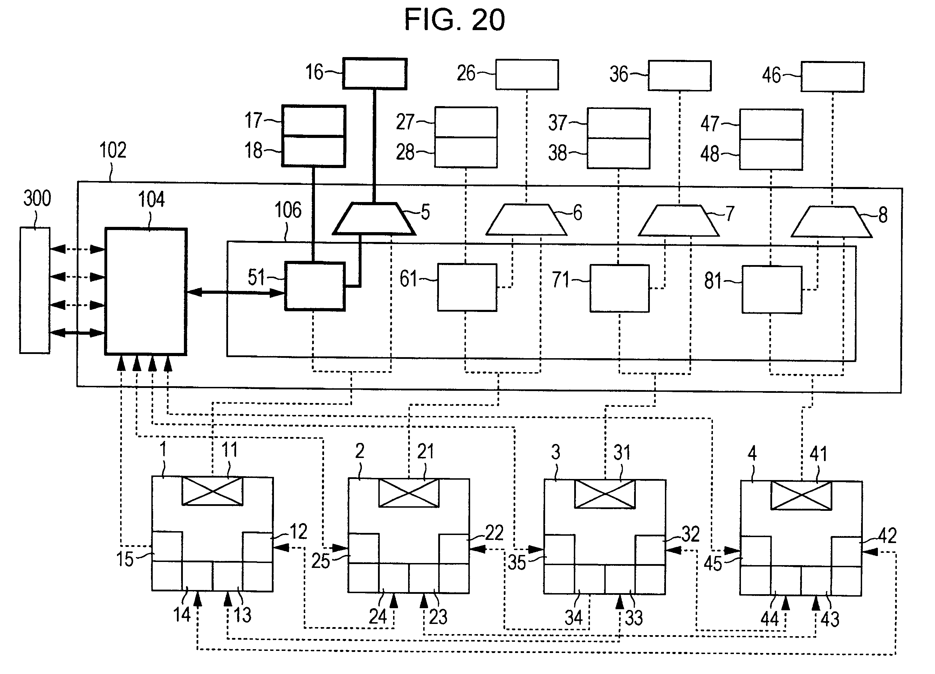

Fig. 20 illustrates an operation of the system when a processor (not shown) mounted on a certain system board accesses a memory module from an extended sub memory controller being managed by a processor mounted on another system board via the system bus controller 104. First, the processor mounted on the certain system board transmits a request to the system bus controller 104 via the crossbar 300. The system bus controller 104 transmits the request to the extended sub memory controller 51. The system bus controller 104 transmits the system address to the extended sub memory controller 51. The extended sub memory controller 51 transmits the request to one of the memory modules 16, 17 and 18 on the basis of the local address table 530.

In the mode 3, as described above, the processor accesses the memory module via the system bus controller and the extended memory controller. Accordingly, the memory module connected to the extended memory controller can be expanded and thus the memory capacity of the system can be increased. Further, a symmetric multiple processor (SMP) can be implemented in which a plurality of processors can access a memory module simultaneously.

### (Modes 1, 3)

Finally, a mixed mode of the modes 1 and 3 will be described. The system management board 400 sets the setting register 110 so that the memory controller 11 is turned on. The system management board 400 sets up the setting register 1044 so that the system bus controller 104 is turned on. The system management board 400 sets up the setting register 510 so that the extended sub memory controller 51 is turned on.

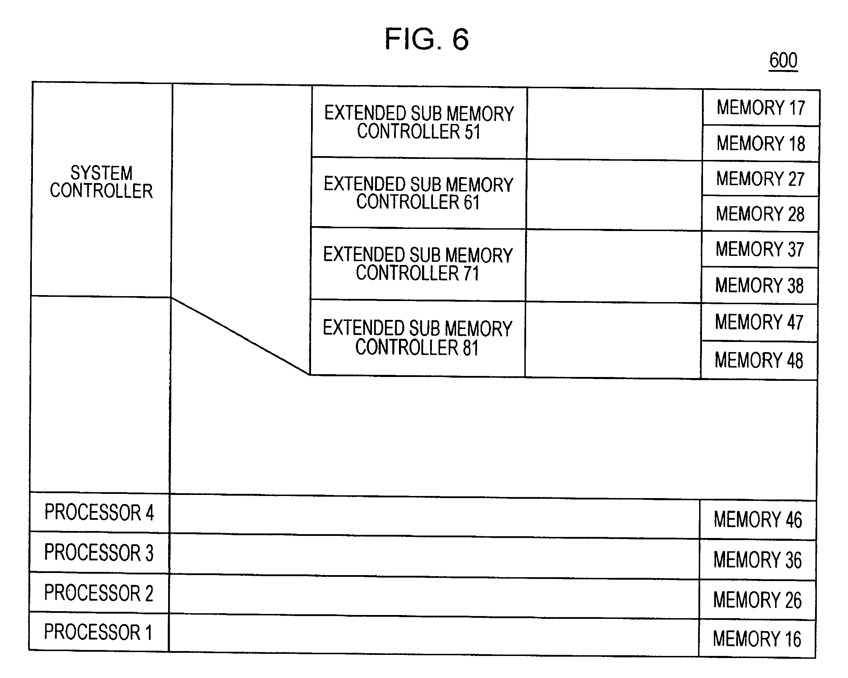

Fig. 6 illustrates exemplary allocation of a memory space 600 in this mode. As illustrated in Fig. 6, the extended sub memory controllers 51, and 61, 71 and 81 are allocated to the system controller. The memory modules 17 and 18 are allocated to the extended sub memory controller 51. The memory modules 27 and 28 are allocated to the extended sub memory controller 61. The memory modules 37 and 38 are allocated to the extended sub memory controller 71. The memory modules 47 and 48 are allocated to the extended sub memory controller 81. The memory module 16 is allocated to the processor 1. The memory module 26 is allocated to the processor 2. The memory module 36 is allocated to the processor 3. The memory module 46 is allocated to the processor 4. In this manner, the mixed mode of the modes 1 and 3 is implemented by separated allocation of, in the memory space, the memory module that can be accessed by the extended sub memory controller and the memory module that can be accessed by the processor.

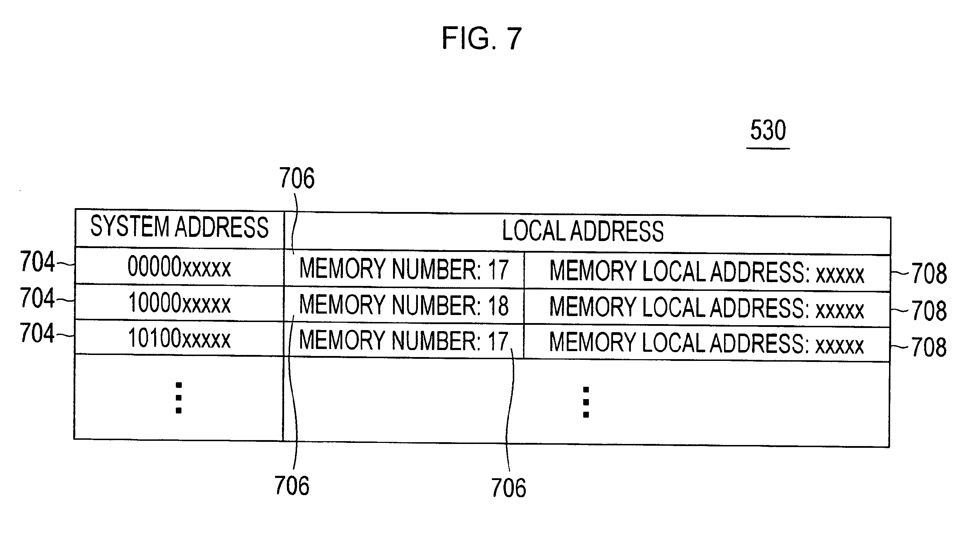

Fig. 7 illustrates exemplary decoding of the local address table 530. The local address table 530 includes a plurality of pieces of entry information. The local address table 530 further includes paired pieces of information of the system address 704 and the local address, which is a combination of the memory number 706 and the memory local address 708 corresponding to the system address 704. Examples of the memory local address herein include a DIMM slot number for double data rate-dual inline memory module (DRR-DIMM) and a row address strobe (RAS)/column address strobe (CAS) DRAM address. Such information can be arbitrarily determined by the management path at the time of initialization of the system and the partition. Since the local address table 530 is thus set up, access to the memory module 16 illustrated in Fig. 4 through the access path in the mode 3 can be avoided. In particular, since a memory local address corresponding to the memory module 16 is not defined in the local address table 530, it can be avoided that the request is transmitted to the memory module 16. Accordingly, in the configuration illustrated in Fig. 4, the request is not transmitted to the memory module 16 from the selector 538 through the bus 515.

The system management board 400 sets the setting register 534 so that the selector 538 selects an output of the bus 512. The system management board 400 sets the setting register 526 so that the selector 528 selects an output of the AND circuit 522. The system management board 400 sets up the setting register 532 so that the selector 536 selects an output of the bus 518. The output of the bus 512 is not input into the memory module 17 or 18 but is input only into the memory module 16.

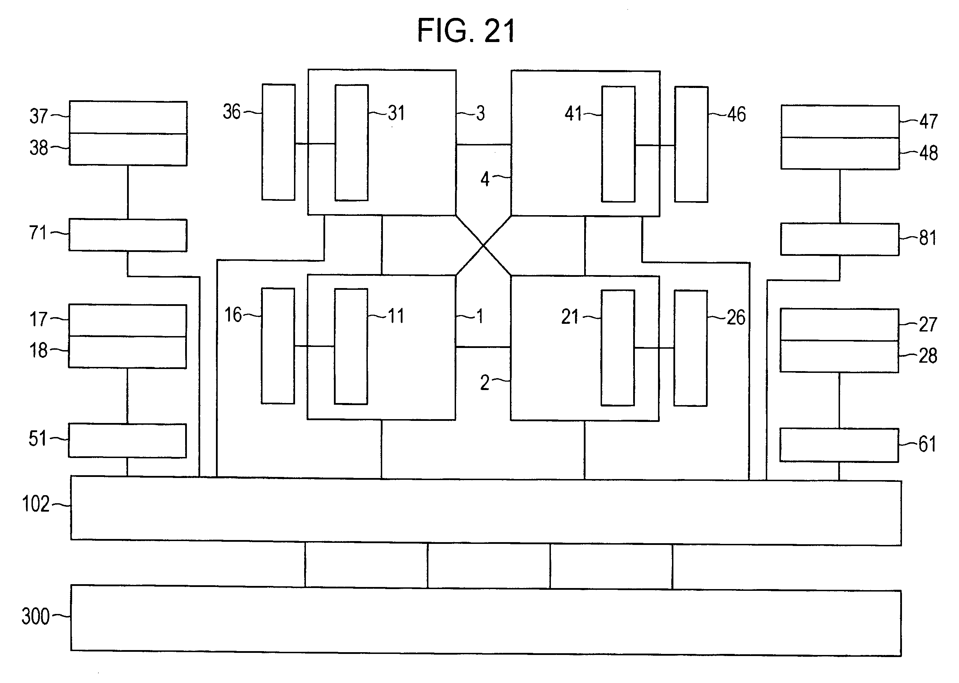

Fig. 21 illustrates an exemplary system implementable in the mixed mode of the modes 1 and 3. Fig. 21 schematically illustrates the system. For example, the processor 1 can transmit a request from the memory controller 11 to the memory module 16. For example, the processor 1 can transmit a request from the memory controller 31 of the processor 3 to the memory module 36. For example, the processor 1 can transmit a request from the memory controller 31 of the processor 3 to the memory module 36 via the system controller 102. For example, a request can be transmitted from the processor 1 to the memory modules 17 and 18 via the system controller 102 and via the extended sub memory controller 51. For example, the processor 1 can transmit a request to the memory module of another system board via the system controller 102 and the crossbar 300. Since other processors 2, 3 and 4 operate in a similar manner, description thereof will be omitted.

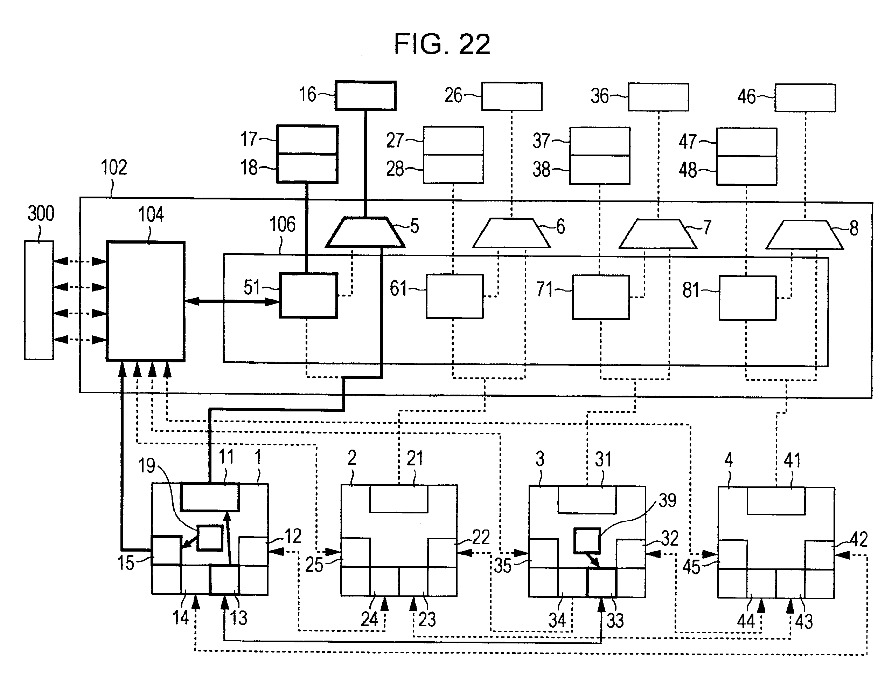

An operation of the system in the mixed mode of the modes 1 and 3 is illustrated in Fig. 22. The processor 1 accesses the memory modules 17 and 18 via the system bus controller 104 and the extended sub memory controller 51. The processor 3 accesses the memory module 16 via the memory controller 11.

In the mixed mode of the modes 1 and 3, as described above, the memory controller 11 mounted on the processor 1 accesses the memory module 16, for which high-speed memory access is required. A request for increased memory capacity is fulfilled by the extended sub memory controller 51 accessing the memory modules 17 and 18. In this manner, higher-speed memory access and increased memory capacity can be provided.

As described above, three memory access methods are provided in the present embodiment. Each accessing method is determined by the system management board 400 setting a register of each controller via the system management path as described above.

In the information processing unit, inside of the housing is divided with a plurality of partitions so that the partitioned sections can operate as independent systems. That is, a different operating system (OS) can be operated for each partitioned section. Accordingly, a plurality of operations can be established in a single housing and the system can be constituted flexibly. A minimum configuration of the partitioned section is a system board and an input/output (I/O) board. However, various combinations of components can be employed in accordance with the system configuration. For example, a larger number of system boards can be allocated to a partitioned section which requires more abundant resources for the central processing unit (CPU) and for the memory. A larger number of I/O boards can be allocated to a partitioned section which requires more abundant resources for the I/O. Each partitioned section is protected so as not to be affected by other partitioned sections. Accordingly, other partitioned sections are not affected if any accidents occur in a certain partitioned section. According to the present embodiment, since the system management board 400 sets the register of each controller in each partitioned section, a different memory access method can be set for each partitioned section.

The system management board 400 sets the register of each controller at the time of initialization of the entire system, initialization for each partitioned section or reconstruction of the partitions, for example.

Here, combinations of memory access modes will be described. Each accessing method is set at the time of, for example, system initialization. Accordingly, neither setting of turning on and off of each controller nor selection of the multiplexer changes dynamically unless an error occurs after the system initialization is completed. The extended sub memory controller can be set individually. Accordingly, a different accessing method can be set up for each extended sub memory controller.

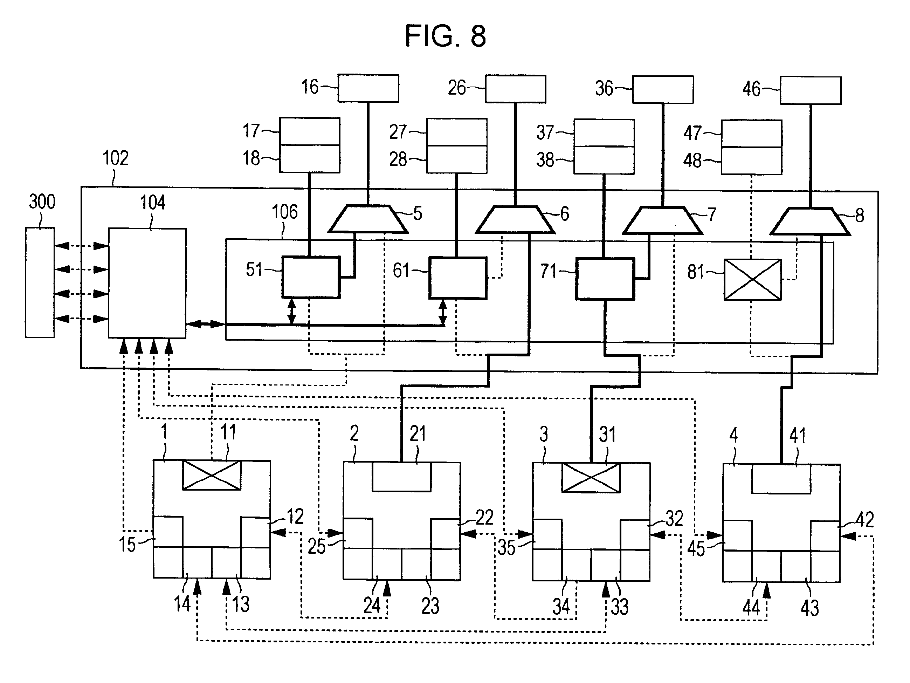

Fig. 8 illustrates an exemplary system in which different accessing methods are set in the extended sub memory controllers or other devices. The extended sub memory controller 51 operates in the mode 3. The extended sub memory controller 61 operates in the mixed mode of modes 1 and 3. The extended sub memory controller 71 operates in the mode 2. The extended sub memory controller 81 operates in the mode 1. In order to implement the system illustrated in Fig. 8, it is only needed to change the setup of the address table of the extended memory controller. In particular, it is only needed to prepare a plurality of entries of correspondence information of the system address and the extended sub memory controller in the address table. Accordingly, a system with a plurality of system boards can be divided into partitioned sections in the same system configuration regardless of division of the system board. Examples of the system configuration may include SMP and non-uniform memory access (NUMA).

### (Effectiveness of the Present Embodiment)

Finally effectiveness of the present embodiment will be described.

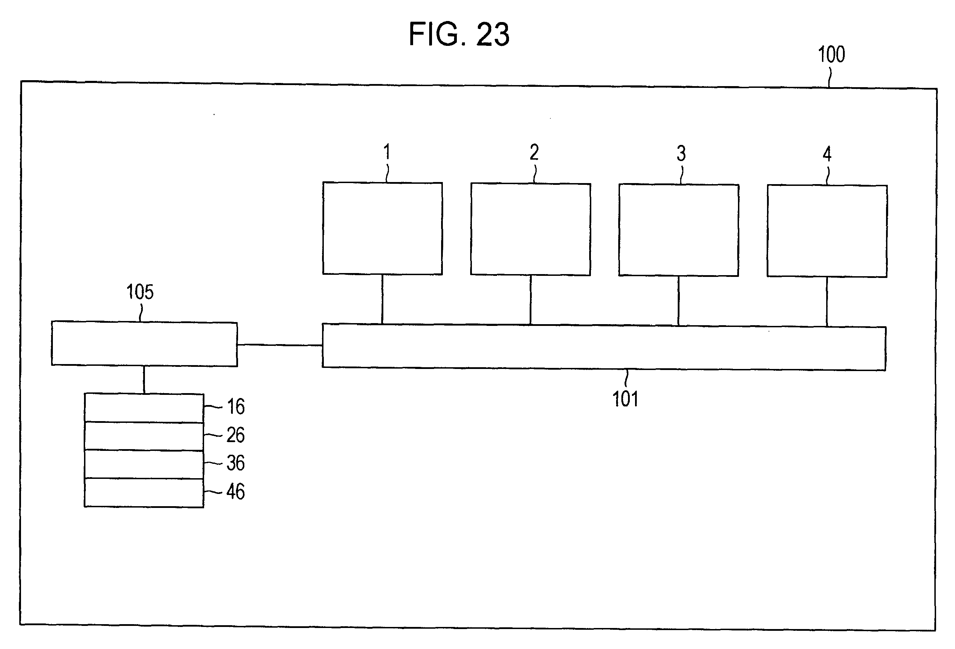

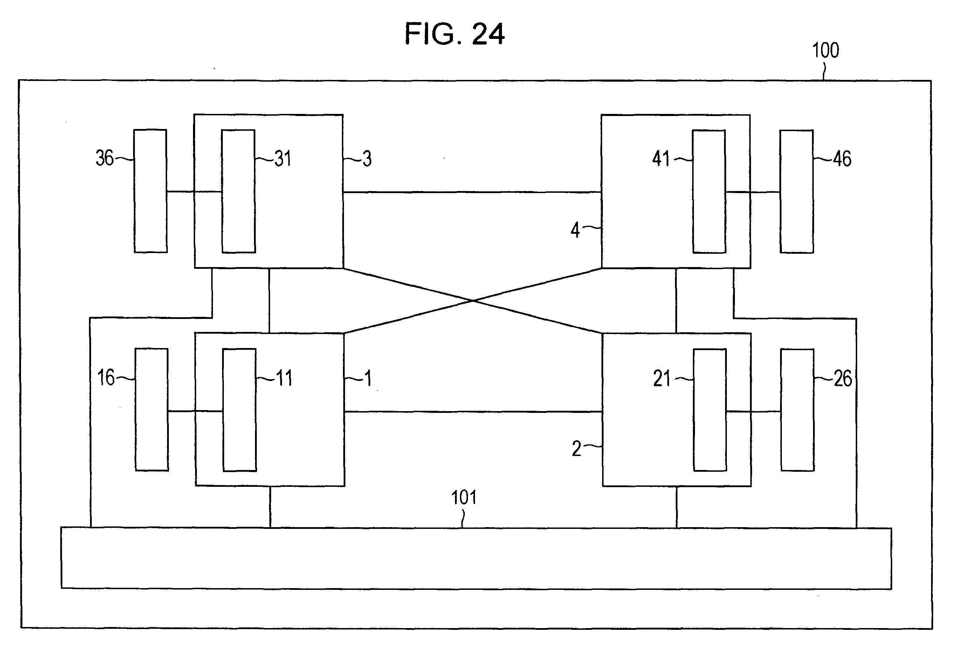

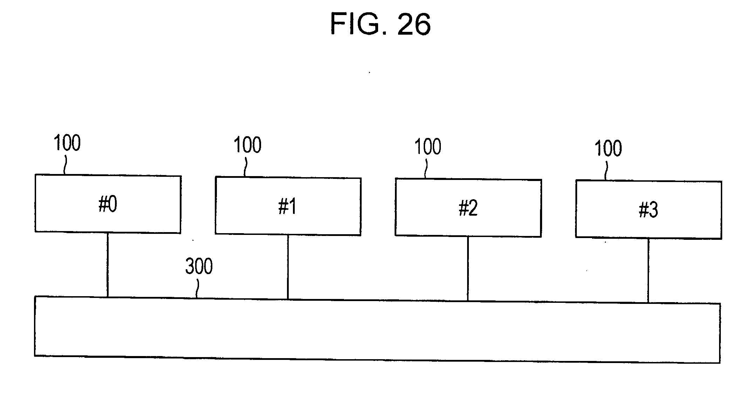

For example, a system board 100 illustrated in Fig. 23 will be described. In such a system board 100, the processors 1 to 4 access the memory controller 105 via the system controller 101. Then, the memory controller 105 writes or reads data to or from the memory modules 16, 26, 36 and 46. For example, a system board 100 illustrated in Fig. 24 will be described. Each of the processors 1 to 4 has the memory controller 11, 21, 31 and 41, respectively, mounted thereon. The processors 1 to 4 are directly linked together. If a memory module to which a certain processor makes a request for access is being managed by a memory controller mounted on the processor, the memory access does not appear on the system. Processors make a request regarding another processor for direct access to a memory included in that processor. The system controller 101 illustrated in Fig. 24 is needed in, for example, a system illustrated in Fig. 26. A plurality of system boards 100 are connected to the crossbar 300 in the system illustrated in Fig. 26.

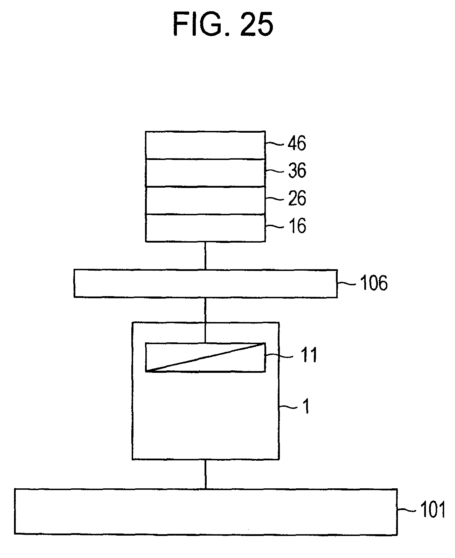

In the system in which the processor has a memory controller mounted thereon illustrated in Fig. 24, however, the memory capacity that can be managed by the processor is smaller than that of the system illustrated in Fig. 23. In such a system, the processor 1 thus has a function to turn off the memory controller 11 mounted thereon as illustrated in Fig. 25. The processor 1 further has a function to make a memory interface be an interface of the same specification as that of the system bus. The extended memory controller 106 can thus be connected to the processor 1. In this manner, the memory modules 16, 26, 36 and 46 or other devices can be connected to the extended memory controller 106 and restriction on the memory capacity can be eliminated. However, since the memory controller is out of the processor, memory access latency will increase.

In the present embodiment, on the contrary, the mixed mode of the modes 1 and 3 is employed in the system illustrated in Fig. 22. In this manner, the memory controller 11 mounted on the processor 1 accesses the memory module 16, for which high-speed memory access is required. A request for increase in memory capacity is fulfilled by the extended sub memory controller 51 accessing the memory module 17 or 18. According to the present embodiment, various systems can exist simultaneously in the information processing unit by switching, by the setting register, memory controller units to be accessed from the memory module. That is, in the information processing unit 0 illustrated in Fig. 1, SMP can be implemented on a certain system board 100, NUMA can be implemented in another certain system board 100 and the system illustrated in Fig. 24 can be implemented at a further system board 100.

## Claims

1. An information processing unit (0), comprising:
a first memory (16) for storing data;
a second memory (17, 18) for storing data;
a first memory controller unit (11) for controlling writing or reading of data to or from the first memory; and
a second memory controller unit (51) for controlling writing or reading of the data to or from the first memory (16) and the second memory (17, 18); **characterised by**:
selection means (528, 538) for selecting one of the first and the second memory controller units and causing the selected memory controller unit to write or read data to or from the first memory (16).

2. The information processing unit according to claim 1, wherein, if the selection means has selected the first memory controller unit (11), the first memory controller unit writes or reads data to or from the first memory (16).

3. The information processing unit according to claim 1, wherein, if the selection means has selected the second memory controller unit (51), the second memory controller unit writes or reads data to or from the first memory (16) and the second memory (17, 18).

4. The information processing unit according to claim 1, wherein:
the information processing unit further includes a control unit (102) for controlling the second memory controller unit (51); and
if the selection means has selected the first memory controller unit (11), the control unit causes the second memory controller unit to write or read data to or from the second memory (17, 18).

5. The information processing unit according to claim 1, wherein:
the information processing unit further includes a processing device (1) for processing data; and
the first memory controller unit (11) is provided in the processing device (1).

6. The information processing unit according to claim 5, wherein the second memory controller unit (51) is connected to the processing device (1).

7. The information processing unit according to claim 1, having a first system board (100) and a second system board (200), the first memory controller unit (11), the second memory controller unit (51) and the selection means (528, 538) being included in the first system board, and the second system board including: a third memory for storing data; a fourth memory for storing data; a third memory controller unit for controlling writing or reading of data to or from the third memory; a fourth memory controller unit for controlling writing or reading of data to or from the third memory and the fourth memory; and second selection means for selecting one of the third or the fourth memory controller units and causing the selected memory controller unit to write or read data to or from the third memory.

8. The information processing unit according to claim 7, wherein:
the first selection means (528, 538) selects the first memory controller unit (11);
the first memory controller unit (11) writes or reads data to or from the first memory (16);
the second selection means selects the fourth memory controller unit; and
the fourth memory controller unit writes or reads data to or from the third memory or the fourth memory.

9. The information processing unit according to claim 7, wherein:
the second system board (200) further includes a control unit for controlling the fourth memory controller unit;
the first selection means (528, 538) selects the first memory controller unit (11);
the first memory controller unit (11) writes or reads data to or from the first memory (16); and
the control unit causes the fourth memory controller unit to write or read data to or from the third memory or the fourth memory.

10. The information processing unit according to claim 7, wherein:
the second system board (200) further includes a control unit for controlling the fourth memory controller unit;
the first selection means (528, 538) selects the second memory controller unit, the second memory controller unit writes or reads data to or from the first memory or the second memory; and
the control unit causes the fourth memory controller unit to write or read data to or from the third memory or the fourth memory.

11. The information processing unit according to claim 7, wherein:
the first system board (100) further includes a first processing device (1) for processing data;
the second system board (200) further includes a second processing device for processing data;
the first memory controller unit (11) is provided in the first processing device(1) ; and
the third memory controller unit is provided in the second processing device.

12. The information processing unit according to claim 11, wherein the second memory controller unit (51) is connected to the first processing device (1) and the fourth memory controller unit is connected to the second processing device.

13. A method of controlling an information processing unit having a first memory controller unit controlling writing or reading of data to or from a first memory in which data is stored and a second memory controller unit controlling writing or reading of data to or from the first memory and a second memory in which data is stored;
**characterised in that** the information processing unit selects one of the first memory controller unit and the second memory controller unit and then causes the selected one of the first and the second memory controller units to write or read data to or from the first memory.

14. The control method according to claim 13, wherein, if the information processing unit has selected the first memory controller unit, the first memory controller unit writes or reads data to or from the first memory.

15. The control method according to claim 13, wherein, if the information processing unit has selected the second memory controller unit, the second memory controller unit writes or reads data to or from the first memory and the second memory.

## Patentansprüche

1. Informationsverarbeitungseinheit (0), Folgendes umfassend:
einen ersten Speicher (16) für das Speichern von Daten;
einen zweiten Speicher (17, 18) für das Speichern von Daten;
eine erste Speichercontrollereinheit (11) zum Steuern des Schreibens oder Lesens von Daten in den bzw. aus dem ersten Speicher; und
eine zweite Speichercontrollereinheit (51) zum Steuern des Schreibens oder Lesens von Daten in den bzw. aus dem ersten Speicher (16) und dem zweiten Speicher (17, 18);
**gekennzeichnet durch**:
Auswahlmittel (528, 538) zum Auswählen entweder der ersten oder der zweiten Speichercontrollereinheit und zum Bewirken des Schreibens oder Lesens von Daten in den bzw. aus dem ersten Speicher (16) **durch** die ausgewählte Speichercontrollereinheit.

2. Informationsverarbeitungseinheit nach Anspruch 1, wobei die erste Speichercontrollereinheit (11) Daten in den ersten Speicher (16) schreibt oder aus diesem liest, wenn die Auswahlmittel die erste Speichercontrollereinheit ausgewählt haben.

3. Informationsverarbeitungseinheit nach Anspruch 1, wobei die zweite Speichercontrollereinheit (51) Daten in den ersten Speicher (16) und den zweiten Speicher (17, 18) schreibt oder aus diesen liest, wenn die Auswahlmittel die zweite Speichercontrollereinheit ausgewählt haben.

4. Informationsverarbeitungseinheit nach Anspruch 1, wobei:
die Informationsverarbeitungseinheit ferner eine Steuereinheit (102) zum Steuern der zweiten Speichercontrollereinheit (51) beinhaltet; und
die Steuereinheit das Schreiben oder Lesen von Daten in den bzw. aus dem zweiten Speicher (17, 18) durch die zweite Speichercontrollereinheit bewirkt, wenn die Auswahlmittel die erste Speichercontrollereinheit (11) ausgewählt haben.

5. Informationsverarbeitungseinheit nach Anspruch 1, wobei:
die Informationsverarbeitungseinheit ferner ein Verarbeitungsgerät (1) für die Verarbeitung von Daten beinhaltet; und
die erste Speichercontrollereinheit (11) in dem Verarbeitungsgerät (1) bereitgestellt ist.

6. Informationsverarbeitungseinheit nach Anspruch 5, wobei die zweite Speichercontrollereinheit (51) mit dem Verarbeitungsgerät (1) verbunden ist.

7. Informationsverarbeitungseinheit nach Anspruch 1, eine erste Systemplatine (100) und eine zweite Systemplatine (200) aufweisend, wobei die erste Speichercontrollereinheit (11), die zweite Speichercontrollereinheit (51) und die Auswahlmittel (528, 538) in der ersten Systemplatine enthalten sind und die zweite Systemplatine Folgendes beinhaltet: einen dritten Speicher zum Speichern von Daten; einen vierten Speicher zum Speichern von Daten; eine dritte Speichercontrollereinheit zum Steuern des Schreibens oder Lesens von Daten in den bzw. aus dem dritten Speicher; eine vierte Speichercontrollereinheit zum Steuern des Schreibens oder Lesens von Daten in den bzw. aus dem dritten Speicher und dem vierten Speicher; und zweite Auswahlmittel zum Auswählen entweder der dritten oder der vierten Speichercontrollereinheit und zum Bewirken des Schreibens oder Lesens von Daten in den bzw. aus dem dritten Speicher durch die ausgewählte Speichercontrollereinheit.

8. Informationsverarbeitungseinheit nach Anspruch 7, wobei:
die ersten Auswahlmittel (528, 538) die erste Speichercontrollereinheit (11) auswählen;
die erste Speichercontrollereinheit (11) Daten in den ersten Speicher (16) schreibt oder aus diesem liest,
die zweiten Auswahlmittel die vierte Speichercontrollereinheit auswählen; und
die vierte Speichercontrollereinheit Daten in den dritten oder den vierten Speicher schreibt oder aus diesen liest.

9. Informationsverarbeitungseinheit nach Anspruch 7, wobei:
die zweite Systemplatine (200) ferner eine Steuereinheit zum Steuern der vierten Speichercontrollereinheit beinhaltet;
die ersten Auswahlmittel (528, 538) die erste Speichercontrollereinheit (11) auswählen;
die erste Speichercontrollereinheit (11) Daten in den ersten Speicher (16) schreibt oder aus diesem liest; und
die Steuereinheit das Schreiben oder Lesen von Daten in den bzw. aus dem dritten Speicher oder dem vierten Speicher durch die vierte Speichercontrollereinheit bewirkt.

10. Informationsverarbeitungseinheit nach Anspruch 7, wobei:
die zweite Systemplatine (200) ferner eine Steuereinheit zum Steuern der vierten Speichercontrollereinheit beinhaltet;
die ersten Auswahlmittel (528, 538) die zweite Speichercontrollereinheit auswählen, die zweite Speichercontrollereinheit Daten in den ersten Speicher oder den zweiten Speicher schreibt oder aus diesen liest; und
die Steuereinheit das Schreiben oder Lesen von Daten in den bzw. aus dem dritten Speicher oder dem vierten Speicher durch die vierte Speichercontrollereinheit bewirkt.

11. Informationsverarbeitungseinheit nach Anspruch 7, wobei:
die erste Systemplatine (100) ferner ein erstes Verarbeitungsgerät (1) zur Verarbeitung von Daten beinhaltet;
die zweite Systemplatine (200) ferner ein zweites Verarbeitungsgerät zur Verarbeitung von Daten beinhaltet;
die erste Speichercontrollereinheit (11) im ersten Verarbeitungsgerät (1) bereitgestellt ist; und
die dritte Speichercontrollereinheit im zweiten Verarbeitungsgerät bereitgestellt ist.

12. Informationsverarbeitungseinheit nach Anspruch 11, wobei die zweite Speichercontrollereinheit (51) mit dem ersten Verarbeitungsgerät (1) verbunden ist und die vierte Speichercontrollereinheit mit dem zweiten Verarbeitungsgerät verbunden ist.

13. Verfahren zum Steuern einer Informationsverarbeitungseinheit, die eine erste Speichercontrollereinheit aufweist, die das Schreiben oder Lesen von Daten in einen bzw. aus einem ersten Speicher steuert, in dem Daten gespeichert sind, und eine zweite Speichercontrollereinheit, die das Schreiben oder Lesen von Daten in den bzw. aus dem ersten Speicher und einem zweiten Speicher steuert, in dem Daten gespeichert sind;
**dadurch gekennzeichnet, dass** die Informationsverarbeitungseinheit entweder die erste Speichercontrollereinheit oder die zweite Speichercontrollereinheit auswählt und dann bewirkt, dass die ausgewählte eine der ersten und der zweiten Speichercontrollereinheit Daten in den ersten Speicher schreibt oder aus diesem liest.

14. Steuerverfahren nach Anspruch 13, wobei die erste Speichercontrollereinheit Daten in den ersten Speicher schreibt oder aus diesem liest, wenn die Informationsverarbeitungseinheit die erste Speichercontrollereinheit ausgewählt hat.

15. Steuerverfahren nach Anspruch 13, wobei die zweite Speichercontrollereinheit Daten in den ersten Speicher und den zweiten Speicher schreibt oder aus diesen liest, wenn die Informationsverarbeitungseinheit die zweite Speichercontrollereinheit ausgewählt hat.

## Revendications

1. Unité de traitement d'informations (0), comprenant :
une première mémoire (16) destinée à stocker des données ;
une deuxième mémoire (17, 18) destinée à stocker des données ;
une première unité de contrôleur de mémoire (11) destinée à commander l'écriture ou la lecture de données vers ou à partir de la première mémoire ; et
une deuxième unité de contrôleur de mémoire (51) destinée à commander l'écriture ou la lecture des données vers ou à partir de la première mémoire (16) et vers ou à partir de la deuxième mémoire (17, 18) ;
**caractérisée par** :
un moyen de sélection (528, 538) destiné à sélectionner l'une des première et deuxième unités de contrôleur de mémoire, et à amener l'unité de contrôleur de mémoire sélectionnée à écrire ou à lire des données vers ou à partir de la première mémoire (16).

2. Unité de traitement d'informations selon la revendication 1, dans laquelle, si le moyen de sélection a sélectionné la première unité de contrôleur de mémoire (11), la première unité de contrôleur de mémoire écrit ou lit des données vers ou à partir de la première mémoire (16).

3. Unité de traitement d'informations selon la revendication 1, dans laquelle, si le moyen de sélection a sélectionné la deuxième unité de contrôleur de mémoire (51), la deuxième unité de contrôleur de mémoire écrit ou lit des données vers ou à partir de la première mémoire (16) et vers ou à partir de la deuxième mémoire (17, 18).

4. Unité de traitement d'informations selon la revendication 1, dans laquelle :
l'unité de traitement d'informations inclut en outre une unité de commande (102) destinée à commander la deuxième unité de contrôleur de mémoire (51) ; et
si le moyen de sélection a sélectionné la première unité de contrôleur de mémoire (11), l'unité de commande amène la deuxième unité de contrôleur de mémoire à écrire ou à lire des données vers ou à partir de la deuxième mémoire (17, 18).

5. Unité de traitement d'informations selon la revendication 1, dans laquelle :
l'unité de traitement d'informations inclut en outre un dispositif de traitement (1) destiné à traiter des données ; et
la première unité de contrôleur de mémoire (11) est délivrée dans le dispositif de traitement (1).

6. Unité de traitement d'informations selon la revendication 5, dans laquelle la deuxième unité de contrôleur de mémoire (51) est connectée au dispositif de traitement (1).

7. Unité de traitement d'informations selon la revendication 1, laquelle présente une première carte système (100) et une seconde carte système (200), la première unité de contrôleur de mémoire (11), la deuxième unité de contrôleur de mémoire (51) et le moyen de sélection (528, 538) étant inclus dans la première carte système, et la seconde carte système comprenant : une troisième mémoire destinée à stocker des données ; une quatrième mémoire destinée à stocker des données; une troisième unité de contrôleur de mémoire destinée à commander l'écriture ou la lecture de données vers ou à partir de la troisième mémoire ; une quatrième unité de contrôleur de mémoire destinée à commander l'écriture ou la lecture de données vers ou à partir de la troisième mémoire et vers ou à partir de la quatrième mémoire ; et un second moyen de sélection pour sélectionner l'une parmi la troisième unité de contrôleur de mémoire ou la quatrième unité de contrôleur de mémoire et pour amener l'unité de contrôleur de mémoire sélectionnée à écrire ou à lire des données vers ou à partir de la troisième mémoire.

8. Unité de traitement d'informations selon la revendication 7, dans laquelle :
le premier moyen de sélection (528, 538) sélectionne la première unité de contrôleur de mémoire (11) ;
la première unité de contrôleur de mémoire (11) écrit ou lit des données vers ou à partir de la première mémoire (16) ;
le second moyen de sélection sélectionne la quatrième unité de contrôleur de mémoire ; et
la quatrième unité de contrôleur de mémoire écrit ou lit des données vers ou à partir de la troisième mémoire ou vers ou à partir de la quatrième mémoire.

9. Unité de traitement d'informations selon la revendication 7, dans laquelle :
la seconde carte système (200) inclut en outre une unité de commande destinée à commander la quatrième unité de contrôleur de mémoire ;
le premier moyen de sélection (528, 538) sélectionne la première unité de contrôleur de mémoire (11) ;
la première unité de contrôleur de mémoire (11) écrit ou lit des données vers ou à partir de la première mémoire (16) ; et
l'unité de commande amène la quatrième unité de contrôleur de mémoire à écrire ou à lire des données vers ou à partir de la troisième mémoire ou vers ou à partir de la quatrième mémoire.

10. Unité de traitement d'informations selon la revendication 7, dans laquelle :
la seconde carte système (200) inclut en outre une unité de commande destinée à commander la quatrième unité de contrôleur de mémoire ;
le premier moyen de sélection (528, 538) sélectionne la deuxième unité de contrôleur de mémoire, la deuxième unité de contrôleur de mémoire écrit ou lit des données vers ou à partir de la première mémoire et vers ou à partir de la deuxième mémoire ; et
l'unité de commande amène la quatrième unité de contrôleur de mémoire à écrire ou à lire des données vers ou à partir de la troisième mémoire ou vers ou à partir de la quatrième mémoire.

11. Unité de traitement d'informations selon la revendication 7, dans laquelle :
la première carte système (100) inclut en outre un premier dispositif de traitement (1) destiné à traiter des données ;
la seconde carte système (200) inclut en outre un second dispositif de traitement destiné à traiter des données ;
la première unité de contrôleur de mémoire (11) est délivrée dans le premier dispositif de traitement (1) ; et
la troisième unité de contrôleur de mémoire est délivrée dans le second dispositif de traitement.

12. Unité de traitement d'informations selon la revendication 11, dans laquelle la deuxième unité de contrôleur de mémoire (51) est connectée au premier dispositif de traitement (1) et la quatrième unité de contrôleur de mémoire est connectée au second dispositif de traitement.

13. Procédé de commande d'une unité de traitement d'informations présentant une première unité de contrôleur de mémoire commandant l'écriture ou la lecture de données vers ou à partir d'une première mémoire dans laquelle des données sont stockées, et une deuxième unité de contrôleur de mémoire commandant l'écriture ou la lecture de données vers ou à partir de la première mémoire et vers ou à partir d'une deuxième mémoire où les données sont stockées ;
**caractérisé en ce que** l'unité de traitement d'informations sélectionne l'une parmi la première unité de contrôleur de mémoire et la deuxième unité de contrôleur de mémoire, et amène ensuite l'unité sélectionnée parmi les première et deuxième unités de contrôleur de mémoire à écrire ou à lire des données vers ou à partir de la première mémoire.

14. Procédé de commande selon la revendication 13, dans lequel, si l'unité de traitement d'informations a sélectionné la première unité de contrôleur de mémoire, la première unité de contrôleur de mémoire écrit ou lit des données vers ou à partir de la première mémoire.

15. Procédé de commande selon la revendication 13, dans lequel, si l'unité de traitement d'informations a sélectionné la deuxième unité de contrôleur de mémoire, la deuxième unité de contrôleur de mémoire écrit ou lit des données vers ou à partir de la première mémoire et vers ou à partir de la deuxième mémoire.
